# EUROPEAN PATENT SPECIFICATION

(11) **EP 3 162 678 B1**
(45) Date of publication and mention of the grant of the patent: **15.08.2018**
(21) Application number: 16189901.8
(22) Date of filing: 21.09.2016
(51) Int. Cl.: B62H 5/06, B62K 5/027, B62K 5/05, B62K 5/08, B62K 5/10, B62K 21/18, B60R 25/021

(54) **VEHICLE**
FAHRZEUG
VÉHICULE

(30) Priority: 30.09.2015 JP 2015194214
(43) Date of publication of application: 03.05.2017
(73) Proprietor: Yamaha Hatsudoki Kabushiki Kaisha, Iwata-shi, Shizuoka 438-8501 (JP)
(72) Inventor: YOSHIKUNI, Hiroyuki, Iwata-shi, Shizuoka 438-8501 (JP); OHNO, Kohsuke, Iwata-shi, Shizuoka 438-8501 (JP); HIRAKAWA, Nobuhiko, Iwata-shi, Shizuoka 438-8501 (JP)
(74) Representative: Grünecker Patent- und Rechtsanwälte PartG mbB

(56) References cited:
- EP-A1- 2 593 352
- CN-A- 1 749 092
- CN-A- 103 192 917
- CN-U- 201 737 110
- CN-U- 202 208 329
- CN-Y- 201 151 444
- DE-U1-202009 017 382

## Description

The present invention relates to a vehicle according to the preamble of independent claim 1. Such a vehicle can be taken from the prior art document EP 2 593 352 A0 that is published as WO 2012/007819 A1.

Prior art document CN 1 749 092 A relates to one kind of light tricycle with seat and the tricycle is superior to available tricycle. The frame of the tricycle includes main tricycle frame comprising upper pipe, lower pipe, front pipe and back vertical pipe, and vertical handlebar sleeve installed in front, back or upper part of the front pipe. The tricycle has middle shaft sleeve mounted in the front part of the lower pipe and on back of the front wheel.

Prior art document CN 202 208 329 U relates to a steering locking device for a motorcycle. The steering locking device for the motorcycles comprises a steering column, a front vertical tube welded onto a frame is sleeved on the steering column, and an upper pallet and a lower pallet are fixed to the upper end and the lower end of the steering column respectively. The steering locking device for the motorcycles is characterized in that a head lock locking plate is fixed to the upper side wall of the front vertical tube, a steering limiting plate is fixed to the lower side wall on the side same as the head lock locking plate, a switch lock is fixed to the middle of the upper pallet, and a left steering limiting block and a right steering limiting block are symmetrically fixed to two sides of the lower pallet.

Patent Document 1 describes a vehicle including a body frame that can lean and two wheels that are aligned in a left-and-right direction. This vehicle includes a link mechanism.

The link mechanism includes an upper cross member and a lower cross member. In addition, the link mechanism also includes a right side member that is connected to right portions of the upper cross member and the lower cross member, and left side member that is connected to left portions of the upper cross member and the lower cross member.

Middle portions of the upper cross member and the lower cross member are supported on the body frame. The upper cross member and the lower cross member are supported on the body frame so as to turn about axes that extend substantially in a front-and-rear direction of the body frame.

The upper cross member and the lower cross member turn relative to the body frame as the body frame leans, whereby a relative position between the two front wheels in an up-and-down direction of the body frame changes. The upper cross member and the lower cross member are provided above the two front wheels in the up-and-down direction of the body frame in such a state that the vehicle is standing upright.

This link mechanism supports the right front wheel and the left front wheel so as to move in the up-and-down direction of the body frame. The link mechanism supports the right front wheel so as to turn about a right steering axis that extends in the up-and-down direction of the body frame and supports the left front wheel so as to turn about a left steering axis that is parallel to the right steering axis.

This vehicle includes a handlebar, a steering shaft and a tie-rod. The handlebar is fixed to the steering shaft. The steering shaft is supported so as to turn relative to the body frame. When the handlebar is turned, the steering shaft is also turned. The tie-rod transmits the turn of the steering shaft to the right front wheel and the left front wheel to thereby turn the right front wheel about the right steering axis and turn the left front wheel about the left steering axis.

### [Prior Art Literature]

[Patent Literature 1] International Patent Publication No. 2014/046282

In the vehicle described in Patent Literature 1, the handlebar turns about an axis that extends in the up-and-down direction of the body frame, and the upper cross member and the lower cross member of the link mechanism turn about the axes that extend in the front-and-rear direction of the body frame. Owing to this, the handlebar is disposed above the link mechanism so as to avoid the interference with the link mechanism.

When attempting to develop a vehicle having a larger engine displacement than that of the vehicle described in Patent Literature 1, greater rigidity is required on the link mechanism, and this enlarges the link mechanism in size, whereby the handlebar position is eventually raised. Alternatively, when attempting to develop a vehicle having a larger maximum banking angle than that of the vehicle described Patent literature 1, the movable range of the link mechanism is enlarged, whereby the handlebar position is eventually raised.

However, the handlebar needs to be provided in a position where a rider sitting on the seat can extend his or her arms to reach it, and therefore, it becomes difficult to set freely the handlebar position.

Then, the inventor of this invention has considered the possibility of enhancing the degree of freedom in setting the handlebar position in order to enhance the usability of the handlebar by the rider by providing the handlebar in a low position where the rider can easily extend his or her arms to reach the handlebar.

In the vehicle described in Patent Literature 1, a steering force that is inputted into the handlebar is transmitted to the tie-rod by the single steering shaft. Then, the inventor has considered a construction in which a steering shaft is divided into two shaft members that are connected to each other, so that a steering force inputted into a handlebar is transmitted to a tie-rod by a mechanism having the two shaft members.

Then, compared with the vehicle described in patent Literature 1, in the vehicle in which the steering force is transmitted to the tie-rod by the mechanism having the two shaft members, there are fears that the vehicle is enlarged in size because a connecting member is added to connect the two shaft members on top of the addition of one shaft member.

Further, when attempting to mount on this vehicle a steer lock mechanism that locks the right front wheel and the left front wheel so as not to be steered or turned and a steer stopper mechanism that restricts the maximum steering angle of the right front wheel and the left front wheel, this may call for a further enlargement in size of the vehicle.

Anobject of the present invention is to provide a vehicle having a steer lock mechanism and a steer stopper mechanism without a risk of enlarging the size of the vehicle while seeking for enhancement in usability of the handlebar by the rider.

According to the present invention said object is solved by a vehicle having the features of the independent claim 1 .
(1) A vehicle having:
   a body frame that can lean to the right of the vehicle when the vehicle turns right and can lean to the left of the vehicle when the vehicle turns left;
   a right front wheel and a left front wheel that are provided so as to be aligned side by side in a left-and-right direction of the body frame;
   a link mechanism that has a cross member that is configured to turn about a link axis that extends in a front-and-rear direction of the body frame relative to the body frame, which is configured to support the right front wheel and the left front wheel so as to be displaced relatively in an up-and-down direction of the body frame and which is configured to support the right front wheel so as to turn about a right steering axis that is configured to extend in the up-and-down direction of the body frame and is configured to support the left front wheel so as to turn about a left steering axis that is parallel to the right steering axis; and
   a steering force transmission mechanism that has a steering force input portion that is situated between the right steering axis and the left steering axis when seen from the front of the vehicle and which is provided so as to turn about a middle steering axis that is parallel to the right steering axis and which is configured to transmit a steering force that is inputted into the steering force input portion to the right front wheel and the left front wheel, wherein
   the steering force transmission mechanism has:
      a rear shaft member into which a steering force is inputted from the steering force input portion and which can turn about a rear axis;
      a front shaft member that is situated ahead of the rear shaft member in relation to the front-and-rear direction of the body frame and which can turn about a front axis;
      a connecting member that is configured to transmit the turn of the rear shaft member to the front shaft member,
      on the link axis of the cross member, a distance between the front shaft member and the cross member being smaller than a distance between the rear shaft member and the cross member,
      when seen from a side of the vehicle that is standing upright and which is kept not steered at all, a distance between the front shaft member and the right steering axis being smaller than a distance between the rear shaft member and the right steering axis,
      when seen from the side of the vehicle that is standing upright and which is kept not steered at all, a distance between the rear shaft member and the middle steering axis being smaller than a distance between the front shaft member and the middle steering axis,
      a steer lock mechanism that includes a first portion and a second portion that can be displaced relative to each other and which makes it impossible for the first portion to be displaced relative to the second portion to thereby make it impossible for the right front wheel and the left front wheel to be steered; and
      a steer stopper mechanism that include a third portion and a fourth portion that can be displaced relative to each other and which is configured to stop the relative displacement of the third portion to the fourth portion so as to prevent the right front wheel and the left front wheel from being steered to or more than a maximum steering angle to thereby restrict the maximum steering angle of the right front wheel and the left front wheel, and wherein
   in the steer lock mechanism and the steer stopper mechanism, the first portion and the third portion are provided on a member that is displaced together with the rear shaft member when the rear shaft member is configured to turn or on the rear shaft member, and the second portion and the fourth portion are provided on a member that is displaced relative to the rear shaft portion when the rear shaft member is configured to turn.

   In the vehicle according to the invention, the steering force transmission mechanism that transmits the steering force to the right front wheel and the left front wheel that is inputted into the steering force input portion includes the rear shaft member into which the steering force is inputted from the steering force input portion, the front shaft member and the connecting member that connects the front shaft member and the rear shaft member together. Owing to this, compared with the case where the steering force that is inputted into the steering force input portion is transmitted to the right front wheel and the left front wheel by the single steering shaft, the degree of freedom in designing the arrangement of the steering force input portion becomes high. Owing to this, the steering force input portion can be disposed in a position or posture that enables a rider to use the steering force input portion easily enhance the usability of the rider.
   Further, the vehicle is prevented from being enlarged in size by the following reason.
   A certain degree of rigidity is required on the steer lock mechanism and the steer stop mechanism.
   High rigidity is required on the steer lock mechanism so as to cope with an external force that is exerted on the right front wheel, the left front wheel or the steering force input portion in such a state that the steer lock mechanism locks the right front wheel and the left front wheel so as not to be steered. In addition, high rigidity is also required on a member on which the steer lock mechanism is mounted.
   Similarly, high rigidity is required on the steer stopper mechanism so as to cope with an external force that is exerted on the right front wheel, the left front wheel and the steering force input portion in an attempt to increase further the steering angle of the right front wheel and the left front wheel in such a state that the steer stopper mechanism is restricting the steering angle of the right front wheel and the left front wheel after the right front wheel and the left front wheel are steered to the maximum steering angle. In addition, high rigidity is also required on a member on which the steer stopper mechanism is mounted.
   Owing to this, being different from the invention, in a case where the steer lock mechanism is provided on the rear shaft member, while the steer stopper mechanism is provided on the front shaft member, the rigidity of both the rear shaft member and the front shaft member needs to be increased. Owing to this, a large diameter member needs to be used for both the rear shaft member and the front shaft member, resulting in enlargement in size of the vehicle.
   Then, in case the steer lock mechanism and the steer stopper mechanism are provided on either of the front shaft member and the rear shaft member of the steering force transmission mechanism, only the rigidity of either of the front shaft member and the rear shaft member should be secured. Owing to this, the steering force transmission mechanism can be configured compact, compared with the case where the steer lock mechanism is provided on either of the front shaft member and the rear shaft member of the steering force transmission mechanism and the steer stopper mechanism is provided on the other of the front shaft member and the rear shaft member of the steering force transmission mechanism.
   Then, the inventor of the invention has considered that both the steer lock mechanism and the steer stopper mechanism are provided on either of the front shaft member and the rear shaft member of the steering force transmission mechanism.
   Firstly, the inventor of the invention has studied the provision of the steer lock mechanism and the steer stopper mechanism on the front shaft member.
   In the target vehicle of the invention, on the link axis of the cross member, the distance between the front shaft member and the cross member is smaller than the distance between the rear shaft member and the cross member. Namely, the cross member is provided in the position that lies nearer to the front shaft member than the rear shaft member. Since the cross member receives an impact force from a road surface, the cross member is configured as a thick member, and hence, the cross member has high rigidity. Owing to this, it is considered reasonable to provide the steer lock mechanism and the steer stopper mechanism by using the cross member around the front shaft member or the highly rigid member that supports the cross member.
   However, the inventor of the invention has noticed that the cross member is configured relatively large to secure the high rigidity and that the movable range of the large cross member is also enlarged. Additionally, since the rigidity is required on each of the steer lock mechanism and the steer stopper mechanism, the steer lock mechanism and the steer stopper mechanism also become relatively large in size. Namely, the inventor has noticed that since both the members that may interfere with each other are large in size, an attempt to provide the steer lock mechanism and the steer stopper mechanism on the circumference of the front shaft member has to enlarge the size of the vehicle.
   Then, the inventor of the invention has paid attention to the circumference of the rear shaft member of the steering force transmission mechanism. Since the rear shaft member is provided so as to lie farther from the link mechanism than the front shaft member, it becomes difficult for the rear shaft member to interfere with other members. Then, the inventor of the invention has studied the provision of the steer lock mechanism and the steer stopper mechanism on the circumference of the rear shaft member.
   As a result of an extended study of the rigidity required on the rear shaft member by the inventor, the inventor has noticed that the rigidity of the rear shaft member and the supporting rigidity of the rear shaft member need to be set high in order to receive a steering force that is inputted by the rider. The steering force that is inputted by the rider includes a force component that is inputted to turn the steering force input portion and a force component that is inputted by the rider when the rider attempts to cause the vehicle to lean in the left-and-right direction. Then, the inventor of the invention has noticed that in case the steer lock mechanism and the steer stopper mechanism are provided on the highly rigid rear shaft member and the member that supports the rear shaft member with high rigidity and which is displaced relative to the rear shaft member when the rear shaft member turns, a highly rigid member does not have to be provided only for the steer lock mechanism and the steer stopper mechanism to be mounted thereon, which makes it difficult for the vehicle to be enlarged in size.
   Then, by providing the steer lock mechanism and the steer stopper mechanism on the member that is displaced together with the rear shaft member or the rear shaft member and the member that is displaced relative to the rear shaft member when the rear shaft member turns, the vehicle including the steer lock mechanism and the steer stopper mechanism is provided that is prevented from being enlarged in size while seeking for the enhancement in usability of the vehicle by the rider.
(2) In the vehicle according to the invention, the body frame may have a right frame and a left frame that is provided on the left of the right frame, a front shaft supporting portion that is configured to support the front shaft member so as to turn may be supported by the right frame and the left frame, and a rear shaft supporting portion that is configured to support the rear shaft member so as to turn may be provided on the right frame and the left frame behind a connecting portion that is configured to connect the right frame and the left frame with the front shaft supporting portion in the front-and-rear direction of the body frame.
   According to the vehicle configured as described under (2), the supporting rigidity of both the front shaft supporting portion and the rear shaft supporting portion can be enhanced by making use of the highly rigid body frame.
(3) In the vehicle according to the invention,
   the body frame may have a front shaft supporting portion having a pivotable support portion that is configured to support the cross member so as to turn, and
   the front shaft member is configured to penetrate the front shaft supporting portion.
   According to the vehicle configured as described under (3), the front support portion supports both the cross member and the front shaft member whose turning axes are different from each other, and therefore, the two members can be supported by the one member, whereby not only can the increase in the number of parts be prevented but also the enlargement in size of the vehicle can be prevented.
(4) In the vehicle according to the invention,
   at least one middle shaft member may be provided between the front shaft member and the rear shaft member, so that a steering force that is transmitted to the rear shaft member is transmitted to the front shaft member via the middle shaft member.
   According to the vehicle configured as described under (4), the degree of freedom in designing the steering force transmission member is high, and therefore, the usability of the steering force transmission member by the rider can be enhanced further.
(5) In the vehicle according to the invention, the rear shaft member may be shorter than the front shaft member.
   According to the vehicle configured as described under (5), the rear shaft member into which the steering force applied to the steering force input portion is inputted is shorter than the front shaft member, and therefore, even though an angle formed by the rear shaft member relative to a vertical direction is changed when seen from the side of the vehicle, it becomes difficult for the rear shaft member to interfere with other members. Owing to this, the steering force input portion is easy to be disposed in the position or posture where the rider can use the steering force input portion easily.
(6) In the vehicle according to the invention, the rear shaft member may be longer than the front shaft member.
   According to the vehicle configured as described under (6), in the event that the first portion or the second portion of the steer lock mechanism and the third portion and the fourth portion of the steer stopper mechanism are attached to the long rear shaft member, the area where the rear shaft member is attached is wide, and therefore, it is easy to provide the steer lock mechanism and the steer stopper mechanism in the position where the interference thereof with other members is avoided. In addition, the steer lock mechanism and the steer stopper mechanism can be provided at a plurality of locations, this enhancing the theft preventing effect.
(7) In the vehicle according to the invention,
   when seen from the top of the vehicle, at least part of the steer lock mechanism may be situated behind the rear shaft member. According to the vehicle configured as described under (7), it is easy to prevent the interference of the steer lock mechanism with the link mechanism.
(8) In the vehicle according to the invention,
   when seen from the top of the vehicle that is standing upright and which is kept not steered at all, at least part of the connecting member may be situated either on the right or the left of the rear axis in relation to the left-and-right direction of the body frame, and
   when seen from the top of the vehicle that is standing upright and which is kept not steered at all, at least part of the steer lock mechanism may be situated either on the right or the left of the rear axis in relation to the left-and-right direction of the body frame. According to the vehicle configured as described under (8), it is easy to prevent the interference of the steer lock mechanism with the connecting member.
(9) In the vehicle according to the invention,
   the connecting member is configured to transmit a turn of the rear shaft member to the front shaft member by a link construction having at least one joint. According to the vehicle configured as described under (9), in the event that the front shaft member is spaced farther away from the rear shaft member to avoid the interference of the steer lock mechanism or the steer stopper mechanism with the link mechanism, in case the front shaft member and the rear shaft member are connected by the long link, the connecting member can be configured compact in size.
(10) In the vehicle according to the invention,
   the cross member may have an upper cross member and a lower cross member that is provided below the upper cross member,
   the body frame may have an upper supporting portion that is configured to support the upper cross member so as to turn and a lower supporting portion that is configured to support the lower cross member so as to turn, and
   the front shaft member is configured to penetrate the body frame so that the front shaft member passes the upper supporting portion and the lower supporting portion when seen from the front of the vehicle.
   According to the vehicle configured as described under (10), part of the body frame where the upper supporting portion and the lower supporting portion are provided is given enhanced rigidity in order to support the upper cross member and the lower cross member with high rigidity. The front shaft member is provided so as to penetrate part of the body frame whose rigidity is so enhanced, and therefore, the vehicle can be configured compact in size while avoiding the interference of the link mechanism with the steering force transmission mechanism.
   In particular, in the event that part of the body frame where the upper supporting portion and the lower supporting portion are provided is made up of the pipe-shaped member, part of the body frame can be configured highly rigid and light in weight. In case the front shaft member is caused to penetrate the interior of the pipe-shaped body frame, the vehicle can be configured compact in size while avoiding the interference of the link mechanism with the steering force transmission mechanism.
(11) In the vehicle according to the invention, the body frame may have a link supporting portion that is configured to support the cross member so as to turn,
   the cross member may have a front cross element that is situated ahead of the link supporting portion and a rear cross element that is situated behind the link supporting portion, and
   the front axis of the front shaft member may be situated between a front end of the front cross element and a rear end of the rear cross element.
   According to the vehicle configured as described under (11), when the link mechanism is activated to operate, the front cross element and the rear cross element turn about the link axis that extends in the front-and-rear direction of the body frame. Consequently, even though the front shaft member is provided between the front cross element and the rear cross element, the front shaft member does not interfere with the front cross element and the rear cross element when the link mechanism is activated to operate. Thus, the vehicle can be configured compact in size while preventing the interference.
(12) In the vehicle according to the invention, the body frame may have a pipe-shaped link supporting portion that supports the cross member so as to turn,
   the front shaft member may be provided coaxially with the pipe-shaped link supporting portion, and
   at least part of the front shaft member may be inserted into an interior of the pipe-shaped link supporting portion.

According to the vehicle configured as described under (12), the link supporting portion that is configured to support the cross member so as to turn is made up of the pipe-shaped member, and therefore, the link supporting portion can be configured highly rigid and light in weight. At least part of the front shaft member is inserted into the interior of the pipe-shaped link supporting portion, and therefore, the vehicle can be configured compact in size while configuring the link supporting portion highly rigid and light in weight and avoiding the interference of the link mechanism with the steering force transmission mechanism.

Fig. 1 is a side view showing the whole of a vehicle according to an embodiment of the invention as seen from a left side thereof.
Fig. 2 is a front view showing a front portion of the vehicle shown in Fig. 1.
Fig. 3 is a side view showing a left shock absorbing device and a left front wheel.
Fig. 4 is a plan view showing the front portion of the vehicle shown in Fig. 1.
Fig. 5 is a plan view showing the front portion of the vehicle shown in Fig. 1 when the vehicle is steered.
Fig. 6 is a front view showing the front portion of the vehicle shown in Fig. 1 when the vehicle is caused to lean.
Fig. 7 is a front view showing the front portion of the vehicle shown in Fig. 1 when the vehicle is caused to lean while being steered.
Fig. 8 is a side view showing a steering force transmission mechanism.
Fig. 9 is a plan view showing the steering force transmission mechanism.
Fig. 10 is a bottom view of an upstream side steering shaft.
Fig. 11 is a plan view showing schematically a link supporting portion, a headstock, a right frame, and a left frame.
Fig. 12 is a side view showing a link supporting portion and a downstream side steering shaft according to Modified Example 1 of the invention.
Fig. 13 is a top view of a steering force transmission mechanism of a vehicle according to Modified Example 2 of the invention.
Fig. 14 is a schematic top view of a steering force transmission mechanism of a vehicle according to Modified Example 3 of the invention.

Referring to the accompanying drawings, an example of the embodiment will be described in detail below.

In the accompanying drawings, an arrow F denotes a front or forward direction of a vehicle. An arrow B denotes a back/rear or backward/rearward direction of the vehicle. An arrow U denotes an up or upward direction of the vehicle. An arrow D denotes a down or downward direction of the vehicle. An arrow R denotes a right or rightward direction of the vehicle. An arrow L denotes a left or leftward direction of the vehicle.

A vehicle turns with a body frame leaning in a left-and-right direction of the vehicle relative to a vertical direction. Then, in addition to the directions based on the vehicle, directions based on the body frame will be defined. In the accompanying drawings, an arrow FF denotes a front or forward direction of the body frame. An arrow FB denotes a back/rear or backward/rearward of the body frame. An arrow FU denotes an up or upward direction of the body frame. An arrow FD denotes a down or downward direction of the body frame. An arrow FR denotes a right or rightward direction of the body frame. An arrow FL denotes a left or leftward direction of the body frame.

In this description, a "front-and-rear direction of the body frame," a "left-and-right direction of the body frame" and an "up-and-down direction of the body frame" means a front-and-rear direction, a left-and-right direction and an up-and-down direction based on the body frame as viewed from a rider who rides the vehicle. "A side of or sideways of the body frame" means directly on the right or left of the body frame. "A side of or sideways of the body frame" means directly on the right or left of the body frame.

In this description, an expression reading "something extends in the front-and-rear direction of the body frame" includes a situation in which something extends while being inclined in relation to the front-and-rear direction of the body frame and means that something extends with a gradient which is closer to the front-and-rear direction of the body frame rather than the left-and-right direction and the up-and-down direction of the body frame.

In this description, an expression reading "something extends in the left-and-right direction of the body frame" includes a situation in which something extends while being inclined in relation to the left-and-right direction of the body frame and means that something extends with a gradient which is closer to the left-and-right direction of the body frame rather than the front-and-rear direction of the body frame and the up-and-down direction of the body frame.

In this description, an expression reading "something extends in the up-and-down direction of the body frame" includes a situation in which something extends while being inclined in relation to the up-and-down direction of the body frame and means that something extends with a gradient which is closer to the up-and-down direction of the body frame rather than the front-and-rear direction of the body frame and the left-and-right direction of the body frame.

In this description, an expression reading the "body frame stands upright or is in an upright state" means a state in which the up-and-down direction of the body frame coincides with the vertical direction in such a state that the vehicle is kept not steered at all. In this state, the directions based on the vehicle and the directions based on the vehicle frame coincide with each other. When the vehicle is turning with the body frame caused to lean to the left or right direction from the vertical direction, the left-and-right direction of the vehicle does not coincide with the left-and-right direction of the body frame. Likewise, the up-and-down direction of the vehicle does not coincide with the up-and-down direction of the body frame. However, the front-and-rear direction of the vehicle coincides with the front-and-rear direction of the body frame.

In this description, an expression reading "rotation or rotating" means that a member is displaced at an angle of 360 degrees or more about a center axis thereof. In this description, "turning" means that a member is displaced at an angle of less than 360 degrees about a center axis thereof.

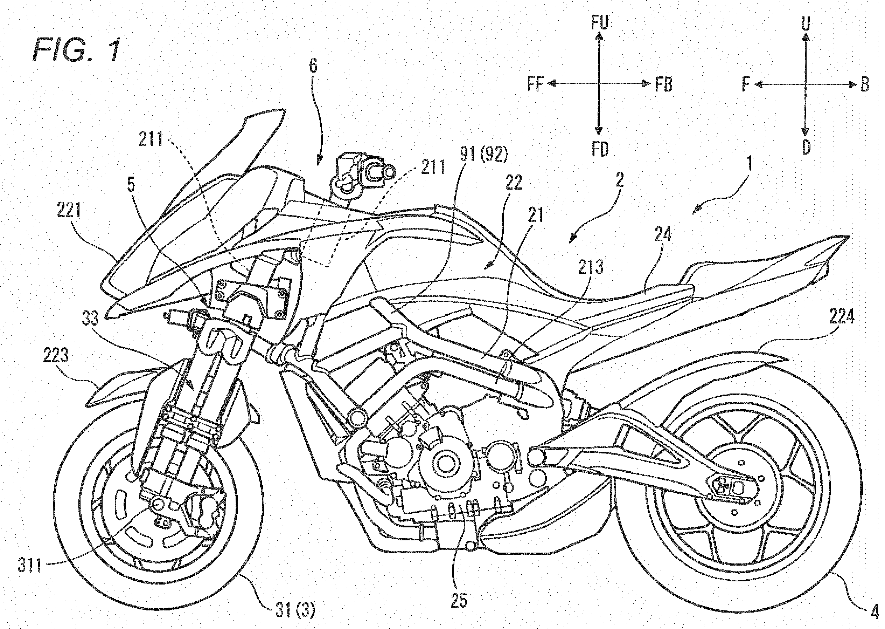

Referring to Figs. 1 to 7, a vehicle 1 according to an embodiment will be described. The vehicle 1 is a vehicle which is driven by means of power generated from a power source and which includes a body frame which can leans and two front wheels which are aligned side by side in a left-and-right direction of the body frame.

Fig. 1 is a left side view showing the whole of the vehicle 1 as viewed from the left thereof. The vehicle 1 includes a vehicle main body portion 2, a pair of left and right front wheels 3, a rear wheel 4, a link mechanism 5 and a steering force transmission mechanism 6.

The vehicle main body portion 2 includes a body frame 21, a body cover 22, a seat 24 and an engine unit 25. In Fig. 1, the vehicle 1 is standing upright or is in an upright state. The following description which will be made by reference to Fig. 1 is based on the premise that the vehicle 1 is standing in the upright state.

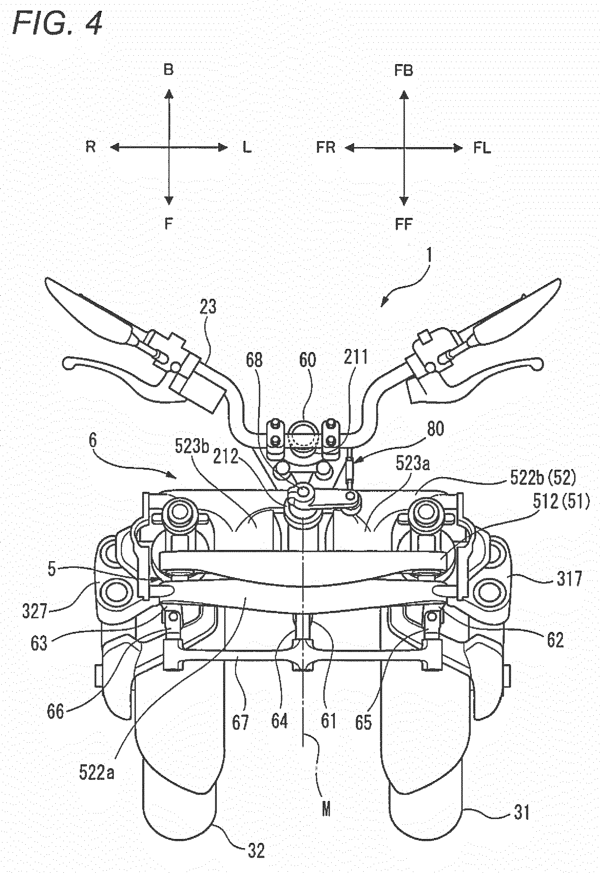

The body frame 21 extends in the front-and-rear direction of the vehicle 1. The body frame 21 includes a headstock 211 (refer to Fig. 4: an example of a rear shaft supporting portion), a link supporting portion 212 (refer to Fig. 4: an example of a front shaft supporting portion), an engine supporting portion 213, a left frame 91 and a right frame 92.

The headstock 211 supports an upstream side steering shaft 60, which will be described later, so as to turn. The headstock 211 extends in an up-and-down direction of the body frame 21.

The link supporting portion 212 is provided ahead of the headstock 211 in a front-and-rear direction of the vehicle 1. The link supporting portion 212 supports the link mechanism 5 so as to turn.

The engine supporting portion 213 is provided behind the headstock 211 in the front-and-rear direction of the vehicle 1. The engine supporting portion 213 supports the engine unit 25. The engine unit 25 supports the rear wheel 4 so as to allow the oscillation thereof. The engine unit 25 includes a power source such as an engine, an electric motor, a battery or the like and a device such as a transmission. The power source generates a force by which the vehicle 1 is driven.

The right frame 92 is provided on the right of the left frame 91 in relation to a left-and-right direction of the vehicle. The right frame 92 and the left frame 91 have a laterally symmetrical shape. The left frame 91 and the right frame 92 connect the headstock 211, the link supporting portion 212 and the engine supporting portion 213 together.

The body cover 22 includes a front cover 221, a pair of left and right front mudguards 223 and a rear mudguard 224. The body cover 22 is a body part which covers at least part of body parts which are mounted on the vehicle 1 such as the pair of left and right front wheels 3, the body frame 21, the link mechanism 5 and the like.

The front cover 221 is disposed ahead of the seat 24. The front cover 221 covers the link mechanism 5 and at least a part of the steering force transmission mechanism 6.

At least portions of the pair of left and right front mudguards 223 are individually disposed directly below the front cover 221. At least portions of the pair of left and right front mudguards 223 are disposed directly above the pair of left and right front wheels 3, respectively.

At least a portion of the rear mudguard 224 is disposed directly above the rear wheel 4.

At least portions of the pair of left and right front wheels 3 are disposed directly below the front cover 221.

At least portion of the rear wheel 4 is disposed below the seat 24. At least portion of the rear wheel 4 is disposed directly below the rear fender 224.

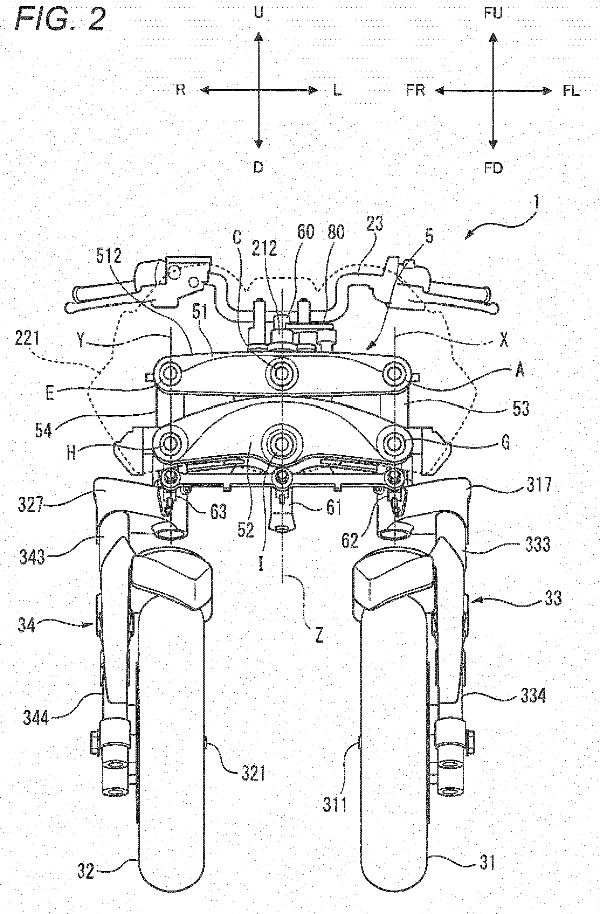

Fig. 2 is a front view of the front portion of the vehicle 1 as viewed from the front of the body frame 21. In Fig. 2, the vehicle 1 is standing in an upright state. The following description which will be made by reference to Fig. 2 is based on the premise that the vehicle 1 is standing upright or in the upright state. Fig. 2 shows the front portion of the vehicle 1 as it were seen through the front cover 221 that is indicated by dashed lines.

The pair of left and right front wheels 3 include a left front wheel 31 and a right front wheel 32. The left front wheel 31 and the right front wheel 32 are provided so as to be aligned side by side in the left-and-right direction of the body frame 21. The right front wheel 32 is provided on the right of the left front wheel 31 on the body frame 21.

The vehicle 1 includes a left shock absorbing device 33, a right shock absorbing device 34, a left bracket 317 and a right bracket 327.

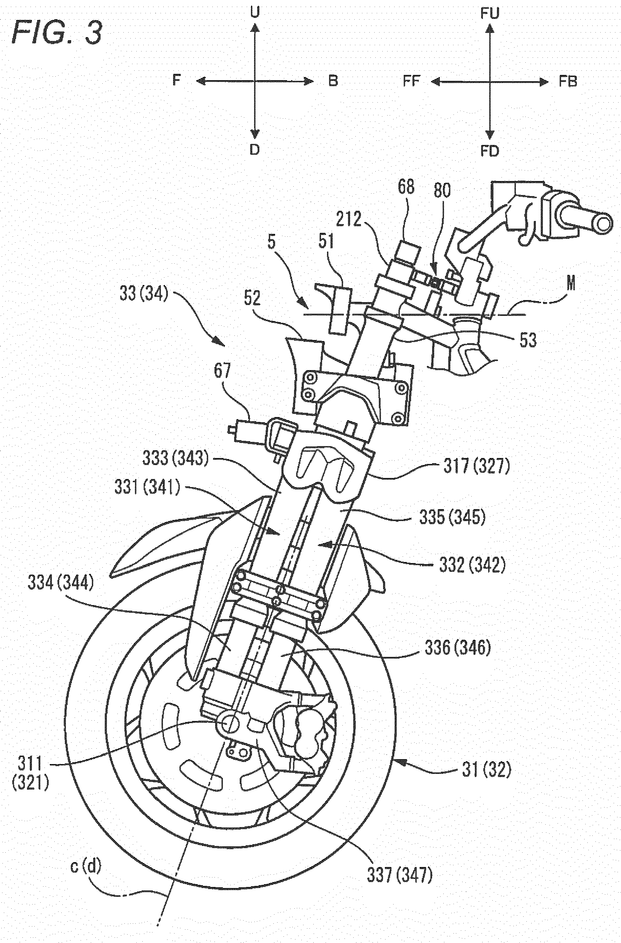

Fig. 3 is a side view showing the left shock absorbing device 33 and the left front wheel 31. The right shock absorbing device 34 and the left shock absorbing device 33 are constructed laterally symmetrically with each other, and therefore, reference numerals denoting the right shock absorbing device 34 are also written in Fig. 3.

As shown in Fig. 3, the left shock absorbing device 33 is a so-called telescopic shock absorbing device. The left shock absorbing device 33 has a left front telescopic element 331, a left rear telescopic element 332 and a left inner connecting element 337.

The left front telescopic element 331 has a left front outer tube 333 and a left front inner tube 334. A lower portion of the left front inner tube 334 is connected to the left inner connecting element 337. An upper portion of the left front inner tube 334 is inserted into the left front outer tube 333. An upper portion of the left front outer tube 333 is connected to the left bracket 317. The left front inner tube 334 is displaced relative to the left front outer tube 333 along a left extending and contracting axis c that extends in the up-and-down direction of the body frame 21. The left front telescopic element 331 can extend and contract in the direction of the left extending and contracting axis c as a result of the left front inner tube 334 being displaced relative to the left front outer tube 333 along the left extending and contracting axis c.

At least part of the left rear telescopic element 332 is provided behind the left front telescopic element 331. The left rear telescopic element 332 has a left rear outer tube 335 and a left rear inner tube 336. The left rear outer tube 335 and the left front outer tube 333 are connected together so as not to move.

A lower portion of the left rear inner tube 336 is connected to the left inner connecting element 337. An upper portion of the left rear inner tube 336 is inserted into the left rear outer tube 335. An upper portion of the left rear outer tube 335 is connected to the left bracket 317.

The left rear inner tube 336 is displaced relative to the left rear outer tube 335 along the left extending and contracting axis c that extends in the up-and-down direction of the body frame 21. The left rear telescopic element 332 can extend and contract in the direction of the left extending and contracting axis c as a result of the left rear inner tube 336 being displaced relative to the left rear outer tube 335 along the left extending and contracting axis c.

The left inner connecting element 337 supports a left axle member 311 of the left front wheel 31 rotatably. The left inner connecting element 337 connects a lower portion of the left front inner tube 334 and a lower portion of the left rear inner tube 336 together.

The left shock absorbing device 33 attenuates the displacement of the left front wheel 31 relative to the left front outer tube 333 and the left rear outer tube 335 along the left extending and contracting axis c as a result of the left front telescopic element 331 extending or contracting and the left rear telescopic element 332 extending or contracting.

As shown in Fig. 3, the right shock absorbing device 34 is a so-called telescopic shock absorbing device. The right shock absorbing device 34 has a right front telescopic element 341, a right rear telescopic element 342 and a right inner connecting element 347.

The right front telescopic element 341 has a right front outer tube 343 and a right front inner tube 344. A lower portion of the right front inner tube 344 is connected to the right inner connecting element 347. An upper portion of the right front inner tube 344 is inserted into the right front outer tube 343. An upper portion of the right front outer tube 343 is connected to the right bracket 327. The right front inner tube 344 is displaced relative to the right front outer tube 343 along a right extending and contracting axis d that extends in the up-and-down direction of the body frame 21. The right front telescopic element 341 can extend and contract in the direction of the right extending and contracting axis d as a result of the right front inner tube 344 being displaced relative to the right front outer tube 343 along the right extending and contracting axis d.

At least part of the right rear telescopic element 342 is provided behind the right front telescopic element 341. The right rear telescopic element 342 has a right rear outer tube 345 and a right rear inner tube 346. The right rear outer tube 345 and the right front outer tube 343 are connected together so as not to move.

A lower portion of the right rear inner tube 346 is connected to the right inner connecting element 347. An upper portion of the right rear inner tube 346 is inserted into the right rear outer tube 345. An upper portion of the right rear outer tube 345 is connected to the right bracket 327.

The right rear inner tube 346 is displaced relative to the right rear outer tube 345 along the right extending and contracting axis d that extends in the up-and-down direction of the body frame 21. The right rear telescopic element 342 can extend and contract in the direction of the right extending and contracting axis d as a result of the right rear inner tube 346 being displaced relative to the right rear outer tube 345 along the right extending and contracting axis d.

The right inner connecting element 347 supports a right axle member 321 of the right front wheel 32 rotatably. The right inner connecting element 347 connects a lower portion of the right front inner tube 344 and a lower portion of the right rear inner tube 346 together.

The right shock absorbing device 34 attenuates the displacement of the right front wheel 32 relative to the right front outer tube 343 and the right rear outer tube 345 along the right extending and contracting axis d as a result of the right front telescopic element 341 extending or contracting and the right rear telescopic element 342 extending or contracting.

As shown in Fig. 4, the vehicle 1 includes the steering force transmission mechanism 6. The steering force transmission mechanism 6 includes a handlebar 23 (an example of a steering force input portion), the upstream side steering shaft 60 (the example of the rear shaft member), a connecting member 80, and a downstream side steering shaft 68 (an example of a front shaft member).

The body frame 21 includes the headstock 211 that supports the upstream side steering shaft 60 so as to turn and the link supporting portion 212 that supports the downstream side steering shaft 68 so as to turn. The link supporting portion 212 extends in the direction of a middle center axis Z that extends in the up-and-down direction of the body frame 21, as shown in Fig. 2. In this embodiment, a turning center (a central steering axis) of the handlebar 23 coincides with a turning center (a rear axis) of the upstream side steering shaft.

A steering force is inputted into the handlebar 23. The upstream side steering shaft 60 is connected to the handlebar 23. An upper portion of the upstream side steering shaft 60 is situated behind a lower portion of the upstream side steering shaft 60 in a front-and-rear direction of the body frame 21. The upstream side steering shaft 60 is supported in the headstock 211 so as to turn.

The connecting member 80 connects the upstream side steering shaft 60 and the downstream side steering shaft 68 together. The connecting member 80 is displaced as the upstream side steering shaft 60 turns. The connecting member 80 transmits the turning of the upstream side steering shaft 60 to the downstream side steering shaft 68.

The downstream side steering shaft 68 is supported in the link supporting portion 212 so as to turn. The downstream side steering shaft 68 is connected to the connecting member 80. The downstream side steering shaft 68 is provided ahead of the upstream side steering shaft 60 in the front-and-rear direction of the body frame 21. The downstream side steering shaft 68 turns as the connecting member 80 is displaced. As a result of the downstream side steering shaft 68 turning, the left front wheel 31 and the right front wheel 32 are steered via a tie-rod 67.

The steering force transmission mechanism 6 transmits a steering force exerted on the handlebar 23 by the rider when operating the handlebar 23 to the left bracket 317 and the right bracket 327. A specific configuration will be described in detail later.

In the vehicle 1 according to this embodiment, the link mechanism 5 adopts a four parallel joint link system (also referred to as a parallelogram link).

As shown in Fig. 2, the link mechanism 5 is disposed above the left front wheel 31 and the right front wheel 32. The link mechanism 5 includes an upper cross member 51, a lower cross member 52, a left side member 53 and a right side member 54. The link mechanism 5 is supported so as to turn by the link supporting portion 212 that extends in the direction of the middle center axis Z. Even though the upstream side steering shaft 60 is turned as a result of the operation of the handlebar 23, the link mechanism 5 is kept from following the rotation of the upstream side steering shaft 60 and does not turn.

The upper cross member 51 includes a plate member 512. The plate member 512 is disposed ahead of the link supporting portion 212. The plate member 512 extends in the left-and-right direction of the body frame 21.

A middle portion of the upper cross member 51 is connected to the link supporting portion 212 by a connecting portion C. The upper cross member 51 can turn relative to the link supporting portion 212 about a middle upper axis M that passes through the connecting portion C and extends in the front-and-rear direction of the body frame 21.

A left end portion of the upper cross member 51 is connected to the left side member 53 by a connecting portion A. The upper cross member 51 can turn relative to the left side member 53 about a left upper axis that passes through the connecting portion A to extend in the front-and-rear direction of the body frame 21.

A right end portion of the upper cross member 51 is connected to the right side member 54 by a connecting portion E. The upper cross member 51 can turn relative to the right side member 54 about a right upper axis that passes through the connecting portion E to extend in the front-and-rear direction of the body frame 21.

Fig. 4 is a plan view of the front portion of the vehicle 1 as seen from above the body frame 21. In Fig. 4, the vehicle 1 is standing upright. The following description which will be made by reference to Fig. 4 is based on the premise that the vehicle 1 is standing upright.

As shown in Fig. 4, the lower cross member 52 includes a front plate member 522a and a rear plate member 522b. The front plate member 522a is disposed ahead of the link supporting portion 212. The rear plate member 522b is disposed behind the link supporting portion 212. The front plate member 522a and the rear plate member 522b extend in the left-and-right direction of the body frame 21. The front plate member 522a and the rear plate member 522b are connected together by a left connecting block 523a and a right connecting block 523b. The left connecting block 523a is disposed on the left of the link supporting portion 212. The right connecting block 523b is disposed on the right of the link supporting portion 212.

Returning to Fig. 2, the lower cross member 52 is disposed below the upper cross member 51. The lower cross member 52 extends parallel to the upper cross member 51. A middle portion of the lower cross member 52 is connected to the link supporting portion 212 by a connecting portion I. The lower cross member 52 can turn about a middle lower axis that passes through the connecting portion I to extend in the front-and-rear direction of the body frame 21.

A left end portion of the lower cross member 52 is connected to the left side member 53 by a connecting portion G. The lower cross member 52 can turn about a left lower axis that passes through the connecting portion G to extend in the front-and-rear direction of the body frame 21.

A right end portion of the lower cross member 52 is connected to the right side member 54 by a connecting portion H. The lower cross member 52 can turn about a right lower axis that passes through the connecting portion H to extend in the front-and-rear direction of the body frame 21. A length of the upper cross member 51 from the connecting portion E to the connecting portion A is substantially equal to a length of the lower cross member from the connecting portion H to the connecting portion G.

The middle upper axis M, the right upper axis, the left upper axis, the middle lower axis, the right lower axis and the left lower axis extend parallel to one another. The middle upper axis M, the right upper axis, the left upper axis, the middle lower axis, the right lower axis and the left lower axis are disposed above the left front wheel 31 and the right front wheel 32.

As shown in Figs. 2 and 4, the left side member 53 is disposed on the left of the link supporting portion 212. The left side member 53 is disposed above the left front wheel 31. The left side member 53 extends parallel to the middle center axis Z of the link supporting portion 212. An upper portion of the left side member 317. The left bracket 317 can turn about a left center axis X relative to the left side member 53. The left center axis X extends parallel to the middle center axis Z of right of the link supporting portion 212. The right side member 54 is disposed above the right front wheel 32. The right side member 54 extends parallel to the middle center axis Z of the link supporting portion 212. An upper portion of the right bracket 327. The right bracket 327 can turn about a right center axis Y relative to the right side member 54. The right center axis Y extends parallel to the middle cross member 52, the left side member 53 and the right side member 54 are supported by the link supporting portion 212 so that the upper cross member 51 and the lower cross member 52 are held in postures which are parallel to each other and so that the left side member 53 and the right side member 54 are held in postures which are parallel to each other.

As shown in Figs. 2 and 4, the steering force transmission mechanism 6 includes a middle transmission plate 61, a left transmission plate 62, a right transmission plate 63, a middle joint 64, a left joint 65, a right joint 66, and the tie-rod 67.

The middle transmission plate 61 is connected to a lower portion of the downstream side steering shaft 68. The middle transmission plate 61 cannot turn relative to the downstream side steering shaft 68. The middle transmission plate 61 can turn about the middle center axis Z relative to the link supporting portion 212.

The left transmission plate 62 is disposed on the left of the middle transmission plate 61. The left transmission plate 62 is connected to the left bracket 317. The left transmission plate 62 cannot turn relative to the left bracket 317. The left transmission plate 62 can turn about the left center axis X relative to the left side member 53.

The right transmission plate 63 is disposed on the right of the middle transmission plate 61. The right transmission plate 63 is connected to the right bracket 327. The right transmission plate 63 cannot turn relative to the right bracket 327. The right transmission plate 63 can turn about the right center axis Y relative to the right side member 54.

As shown in Fig. 4, the middle joint 64 is connected to a front portion of the middle transmission plate 61 via a shaft portion that extends in the up-and-down direction of the body frame 21. The middle transmission plate 61 and the middle joint 64 are allowed to turn relative to each other about this shaft portion.

The left joint 65 is disposed directly on the left of the middle joint 64. The left joint 65 is connected to a front portion of the left transmission plate 62 via a shaft that extends in the up-and-down direction of the body frame. The left transmission plate 62 and the left joint 65 are allowed to turn relative to each other about this shaft portion.

The right joint 66 is disposed directly on the right of the middle joint 64. The right joint 66 is connected to a front portion of the right transmission plate 63 via a shaft that extends in the up-and-down direction of the body frame. The right transmission plate 63 and the right joint 66 are allowed to turn relative to each other about this shaft portion.

A shaft portion that extends in the front-and-rear direction of the body frame 21 is provided at a front portion of the middle joint 64. A shaft portion that extends in the front-and-rear direction of the body frame 21 is provided at a front portion of the left joint 65. A shaft portion that extends in the front-and-rear direction of the body frame 21 is provided at a front portion of the right joint 66.

The tie-rod 67 extends in the left-and-right direction of the body frame 21. The tie-rod 67 is connected to the middle joint 64, the left joint 65 and the right joint 66 via those shaft portions. The tie-rod 67 and the middle joint 64 can turn relative to each other about the shaft portion that is provided at the front portion of the middle joint 64. The tie-rod 67 and the left joint 65 can turn relative to each other about the shaft portion that is provided at the front portion of the left joint 65. The tie-rod 67 and the right joint 66 can turn relative to each other about the shaft portion that is provided at the front portion of the right joint 66.

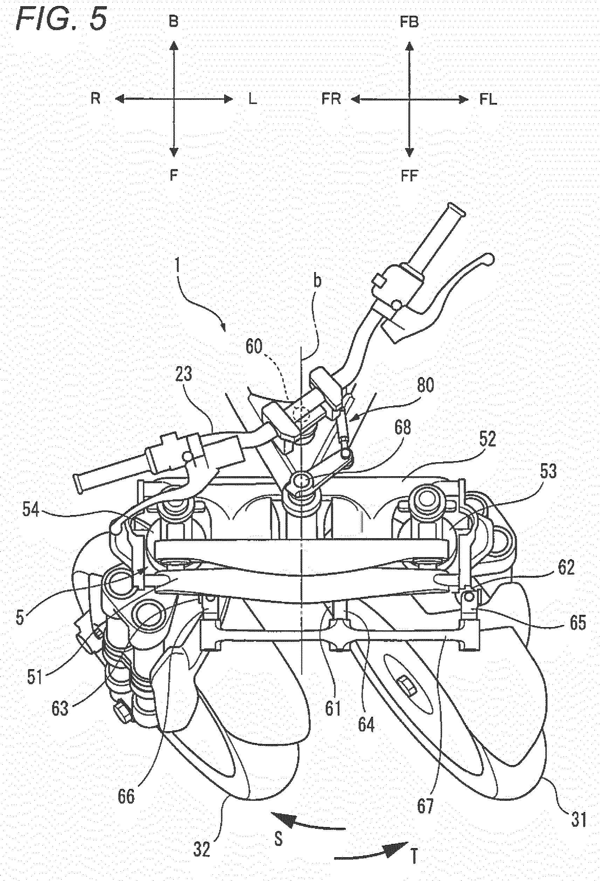

Next, referring to Figs. 4 and 5, a steering operation of the vehicle 1 will be described. Fig. 5 is a plan view, as seen from above the body frame 21, of the front portion of the vehicle 1 in such a state that the left front wheel 31 and the right front wheel 32 are steered or turned to the left.

When the rider operates the handlebar 23, the upstream side steering shaft 60 turns. The turn of the upstream side steering shaft 60 is transmitted to the downstream side steering shaft 68 via the connecting member 80. The downstream side steering shaft 68 turns relative to the link supporting portion 212 about a front steering axis b. In the case of the vehicle 1 being steered to the left as shown in Fig. 5, as the handlebar 23 is operated, the middle transmission plate 61 turns relative to the link supporting portion 212 in a direction indicated by an arrow T about the front steering axis b.

In association with the turning of the middle transmission plate 61 in the direction indicated by the arrow T, the middle joint 64 of the tie-rod 67 turns relative to the middle transmission plate 61 in a direction indicated by an arrow S. This moves the tie-rod 67 leftwards and rearwards while keeping its posture as it is.

As the tie-rod 67 moves leftwards and rearwards, the left joint 65 and the right joint 66 of the tie-rod 67 turn in the direction indicated by the arrow S relative to the left transmission plate 62 and the right transmission plate 63, respectively. This turns the left transmission plate 62 and the right transmission plate 63 in the direction indicated by the arrow T while allowing the tie-rod 67 to keep its posture.

When the left transmission plate 62 turns in the direction indicated by the arrow T, the left bracket 317, which cannot turn relative to the left transmission plate 62, turns in the direction indicated by the arrow T about the left center axis X relative to the left side member 53.

When the right transmission plate 63 turns in the direction indicated by the arrow T, the right bracket 327, which cannot turn relative to the right transmission plate 63, turns in the direction indicated by the arrow T about the right center axis Y relative to the right side member 54.

When the left bracket 317 turns in the direction indicated by the arrow T, the left shock absorbing device 33, which is connected to the left bracket 317 via the left front outer tube 333 and the left rear outer tube 335, turns in the direction indicated by the arrow T about the left center axis X relative to the left side member 53. When the left shock absorbing device 33 turns in the direction indicated by the arrow T, the left front wheel 31, which is supported on the left shock absorbing device 33, turns in the direction indicated by the arrow T about the left center axis X relative to the left side member 53.

When the right bracket 327 turns in the direction indicated by the arrow T, the right shock absorbing device 34, which is connected to the right bracket 327 via the right front outer tube 343 and the right rear outer tube 345, turns in the direction indicated by the arrow T about the right center axis Y relative to the right side member 54. When the right shock absorbing device 34 turns in the direction indicated by the arrow T, the right front wheel 32, which is supported on the right shock absorbing device 34, turns in the direction indicated by the arrow T about the right center axis Y relative to the right side member 54.

When the rider operates the handlebar 23 so as to turn to the right, the elements described above turn in the direction indicated by the arrow S. Since the elements only move the other way around in relation to the left-and-right direction, the detailed description thereof will be omitted here.

Thus, as has been described heretofore, as the rider operates the handlebar 23, the steering force transmission mechanism 6 transmits the steering force accordingly to the left front wheel 31 and the right front wheel 32. The left front wheel 31 and the right front wheel 32 turn about the left center axis X and the right center axis Y, respectively, in the direction corresponding to the direction in which the handlebar 23 is operated by the rider.

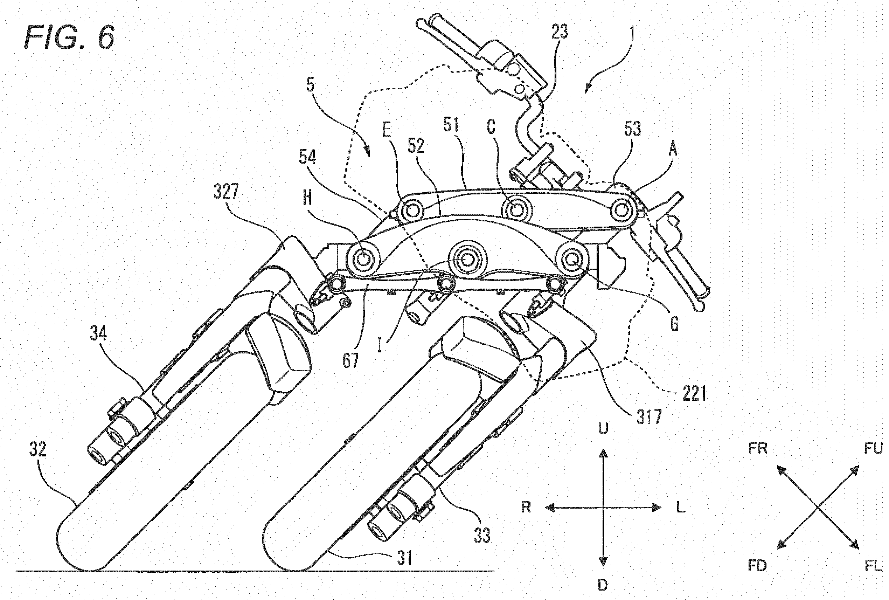

Next, referring to Figs. 2 and 6, a leaning operation of the vehicle 1 will be described. Fig. 6 is a front view of the front portion of the vehicle 1 as viewed from the front of the body frame 21 in such a state that the body frame 21 leans to the left of the vehicle 1. Fig. 6 shows a state as seen through the front cover 221 that is indicated by dashed lines.

As shown in Fig. 2, in such a state that the vehicle 1 is standing upright, when looking at the vehicle 1 from the front of the body frame 21, the link mechanism 5 is having a rectangular shape. As shown in Fig. 6, with the vehicle 1 leaning to the left, when looking at the vehicle 1 from the front of the body frame 21, the link mechanism 5 is having a parallelogram shape.

The deformation of the link mechanism 5 is associated with the leaning of the body frame 21 in the left-and-right direction of the vehicle 1. The operation of the link mechanism 5 means that the upper cross member 51, the lower cross member 52, the left side member 53 and the right side member 54 which make up the link mechanism 5 turn relatively about turning axes which pass through the corresponding connecting portions A, C, E, G, H, I, whereby the shape of the link mechanism 5 changes.

For example, as shown in Fig. 6, when the rider causes the vehicle 1 to lean to the left, the link supporting portion 212 leans to the left from the vertical direction. When the link supporting portion 212 leans, the upper cross member 51 turns counterclockwise as seen from the front of the vehicle 1 about the middle upper axis M that passes through the connecting portion C relative to the link supporting portion 212. Similarly, the lower cross member 52 turns counterclockwise as seen from the front of the vehicle 1 about the middle lower axis that passes through the connecting portion I relative to the link supporting portion 212. This causes the upper cross member 51 to move to the left relative to the lower cross member 52.

As the upper cross member 51 moves to the left, the upper cross member 51 turns counterclockwise as seen from the front of the vehicle 1 about the left upper axis which passes through the connecting portion A and the right upper axis which passes through the connecting portion E relative to the left side member 53 and the right side member 54, respectively. Similarly, the lower cross member 52 turns counterclockwise as seen from the front of the vehicle 1 about the left lower axis which passes through the connecting portion G and the right lower axis which passes through the connecting portion H relative to the left side member 53 and the right side member 54, respectively. This causes the left side member 53 and the right side member 54 to lean to the left from the vertical direction while allowing them to keep their postures that are parallel to the link supporting portion 212.

As this occurs, the lower cross member 52 moves to the left relative to the tie-rod 67. As the lower cross member 52 moves to the left, the shaft portions which are provided at the respective front portions of the middle joint 64, the left joint 65 and the right joint 66 turn relative to the-tie rod 67. This allows the tie-rod 67 to hold a parallel posture to the upper cross member 51 and the lower cross member 52.

As the left side member 53 leans to the left, the left bracket 317 that is connected to the left side member 53 leans to the left. As the left bracket 317 leans to the left, the left shock absorbing device 33 which is connected to the left bracket 317 leans to the left. As the left shock absorbing device 33 leans to the left, the left front wheel 31 that is supported on the left shock absorbing device 33 leans to the left while holding its posture that is parallel to the link supporting portion 212.

As the right side member 54 leans to the left, the right bracket 327 that is connected to the right side member 54 leans to the left. As the right bracket 327 leans to the left, the right shock absorbing device 34 that is connected to the right bracket 327 leans to the left. As the right shock absorbing device 34 leans to the left, the right front wheel 32 that is supported on the right shock absorbing device 34 leans to the left while holding its posture that is parallel to the link supporting portion 212.

The description of the leaning operation of the left front wheel 31 and the right front wheel 32 is based on the vertical direction. However, when the vehicle 1 leans (when the link mechanism 5 is activated to operate), the up-and-down direction of the body frame 21 does not coincide with the vertical up-and-down direction. In the event that the leaning operations are described based on the up-and-down direction of the body frame 21, when the link mechanism 5 is activated to operate, the relative positions of the left front wheel 31 and the right front wheel 32 to the body frame 21 change. In other words, the link mechanism 5 changes the relative positions of the left front wheel 31 and the right front wheel 32 to the body frame 21 in the up-and-down direction of the body frame 21 to thereby cause the body frame 21 to lean relative to the vertical direction.

When the rider causes the vehicle 1 to lean to the right, the elements lean to the right. Since the elements only move the other way around in relation to the left-and-right direction, the detailed description thereof will be omitted here.

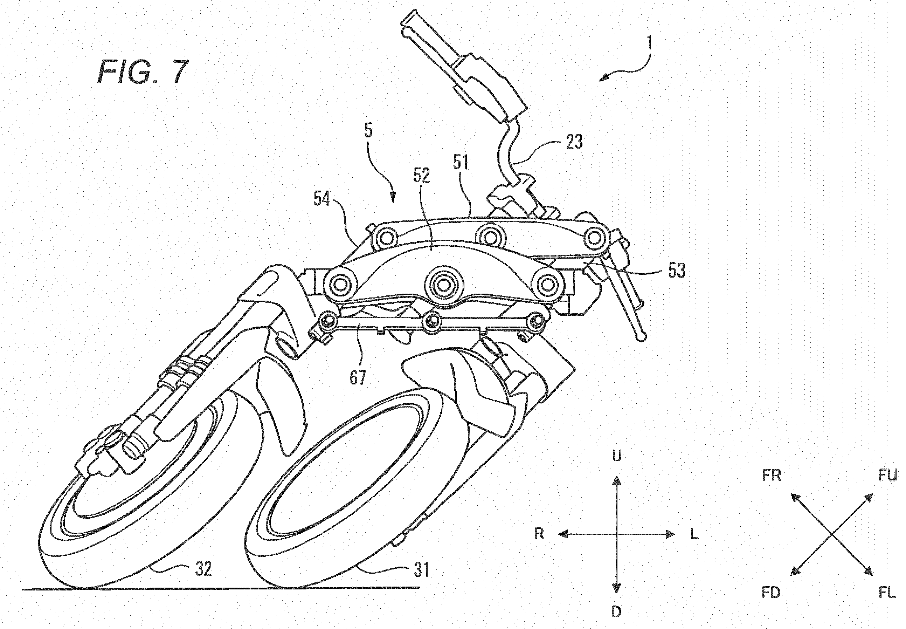

Fig. 7 is a front view of the front portion of the vehicle with the vehicle 1 caused to lean and steered. Fig. 7 shows a state in which the vehicle 1 is steered or turned to the left while being caused to lean to the left. As a result of this steering operation, the left front wheel 31 and the right front wheel 32 are turned to the left, and as a result of the leaning operation, the left front wheel 31 and the right front wheel 32 lean to the left together with the body frame 21. Namely, in this state, the link mechanism 5 exhibits the parallelogram shape, and the tie-rod 67 moves toward the left rear from its position taken when the body frame 21 is in the upright state.

As has been described above, the vehicle 1 according to this embodiment has:
the body frame 21 that can lean to the right of the vehicle 1 when the vehicle 1 turns right and can lean to the left of the vehicle 1 when the vehicle 1 turns left, the right front wheel 32 and the left front wheel 31 that are provided so as to be aligned side by side in the left-and-right direction of the body frame 21;
the link mechanism 5 that has the upper cross member 51 (an example of a cross member) that turns about the middle upper axis M (an example of a link axis) that extends in the front-and-rear direction of the body frame 21, which supports the right front wheel 32 and the left front wheel 31 so as to be displaced relatively in relation to the up-and-down direction of the body frame 21 with the right front wheel 32 being supported so as to turn about the right center axis Y that extends in the up-and-down direction of the body frame 21 and the left front wheel 31 being supported so as to turn about the left center axis X that is parallel to the right center axis Y; and
the steering force transmission mechanism 6 that is situated between the right center axis Y and the left center axis X when seen from the front of the vehicle 1, which has the handlebar 23 (an example of a steering force input portion) that is provided so as to turn about a rear steering axis a (an example of a center steering axis) that is parallel to the right center axis Y and which transmits the steering force inputted into the handlebar 23 to the right front wheel 32 and the left front wheel 31.

### <Details of Steering Force Transmission Mechanism 6>

Next, the steering force transmission mechanism 6 will be described in detail.

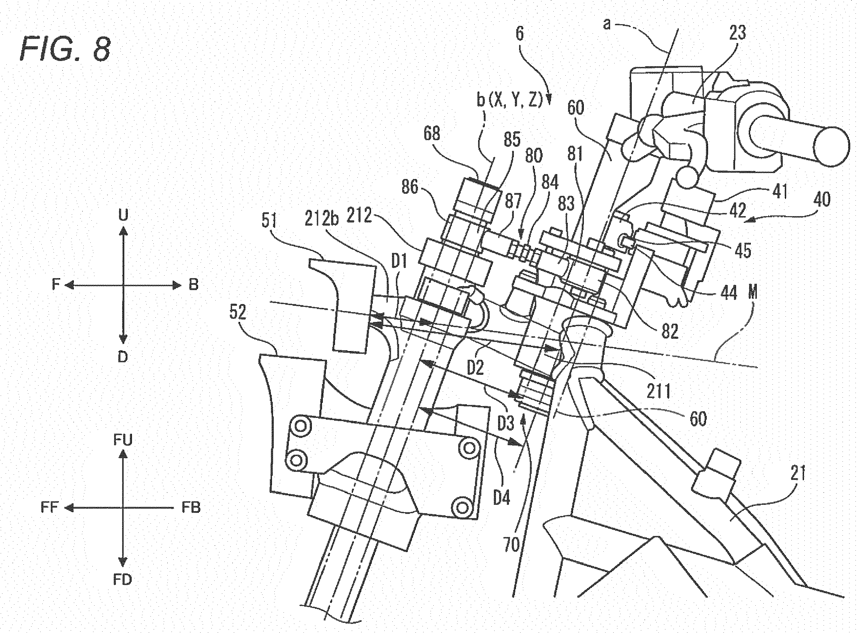

Fig. 8 is a side view showing the steering force transmission mechanism 6. As shown in Fig. 8, the steering force transmission mechanism 6 has the handlebar 23 (the steering force input portion), the upstream side steering shaft 60, the connecting member 80, and the downstream side steering shaft 68. The steering force transmission mechanism 6 transmits a steering force that is inputted into the handlebar 23 to the right front wheel 32 and the left front wheel 31.

The upstream side steering shaft 60 is connected to the handlebar 23. The upstream side steering shaft 60 is supported on the headstock 211 (an example of a first supporting portion) so as to turn about a rear steering axis a that extends in the up-and-down direction of the body frame 21.

An upper portion of the upstream side steering shaft 60 projects above the headstock 211. The handlebar 23 is connected to the portion of the upstream side steering shaft 60 that projects above the headstock 211. The connecting member 80 is connected to the portion of the upstream side steering shaft 60 that projects above the headstock 211. The connecting member 80 is connected to the upstream side steering shaft 60 below the handlebar 23.

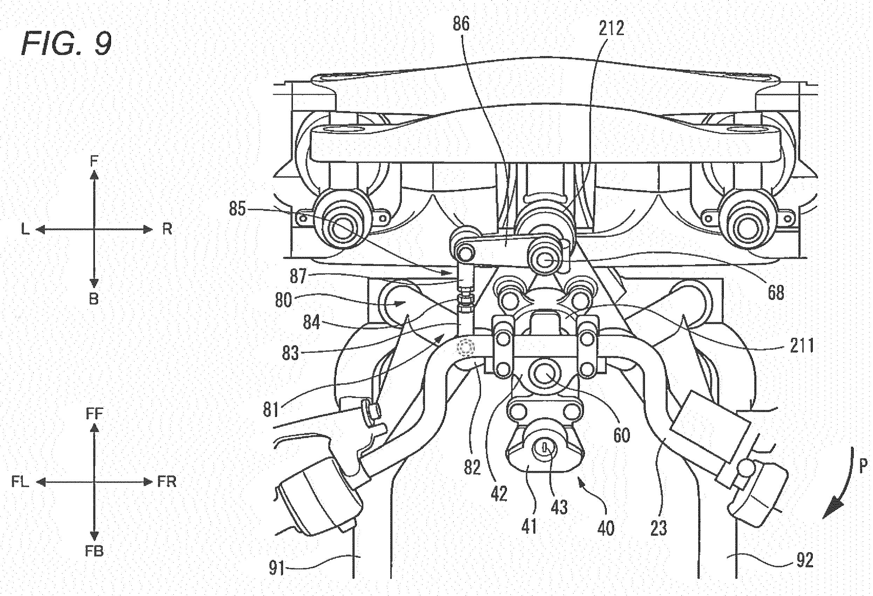

Fig. 9 is a plan view showing the steering force transmission mechanism 6. As shown in Fig. 9, the connecting member 80 is connected to the upstream side steering shaft 60. The connecting member 80 is displaced as the upstream side steering shaft 60 turns.

In this embodiment, the connecting member 80 includes a rear element 81 that is fixed to the upstream side steering shaft 60, a front element 85 that is fixed to the downstream side steering shaft 68, and a bolt member 84 that connects the rear element 81 and the front element 85 together. In this embodiment, the bolt member 84 is provided on the left of the upstream side steering shaft 60 in the left-and-right direction of the body frame 21.

The rear element 81 includes a rear fixing portion 82 that is fixed to the upstream side steering shaft 60 and a rear thread portion 83 that is connected to the rear fixed portion 82 so as to turn about an axis that extends in the up-and-down direction of the body frame 21.

The front element 85 includes a front fixing portion 86 that is fixed to the downstream side steering shaft 68 and a front thread portion 87 that is connected to the front fixing portion 86 so as to turn about an axis that extends in the up-and-down direction of the body frame 21.

A hollow portion is provided on the rear thread portion 83 so as to open to the front, and an female thread portion is provided in an interior of the hollow portion. A hollow portion is also provided on the front thread portion 87 so as to open to the rear, and an female thread portion is provided in an interior of the hollow portion. The bolt member 84 includes male thread portions that are provided at a front portion and a rear portion thereof. The rear portion of the bolt member 84 engages in the rear thread portion 83 of the rear element 81. The front portion of the bolt member 84 engages in the front thread portion 87 of the front element 85. An engaging length of the bolt member 84 into the rear thread portion 83 and an engaging length of the bolt member 84 into the front thread portion 87 are adjusted to thereby adjust an overall length of the connecting member 80 in the front-and-rear direction.

Returning to Fig. 8, the downstream side steering shaft 68 is provided downstream of the upstream side steering shaft 60 in a transmission path of a steering force that is transmitted from the handlebar 23 to the right front wheel 32 and the left front wheel 31. The downstream side steering shaft 68 is connected to the connecting member 80. The downstream side steering shaft 68 can turn about the front steering axis b that extends in the up-and-down direction of the body frame 21 as the connecting member 80 is displaced. In this embodiment, the rear steering axis a and the front steering axis b are parallel to each other.

The downstream side steering shaft 68 is supported on the link supporting portion 212 (a example of a second supporting portion) that is provided ahead of the headstock 211 in the front-and-rear direction of the body frame 21. As described in Figs. 4 and 5, the downstream side steering shaft 68 displaces the tie-rod 67 in the left-and-right direction of the body frame 21 as the upstream side steering shaft 60 turns to thereby turn the right front wheel 32 and the left front wheel 31. In this embodiment, the link supporting portion 212 supports the downstream side steering shaft 68 so as to turn and also supports the upper cross member 51 and the lower cross member 52 so as to turn.

The downstream side steering shaft 68 projects upwards and downwards from the link supporting portion 212. The connecting member 80 is connected to a portion of the downstream side steering shaft 68 that projects upwards from the link supporting portion 212. The middle transmission plate 61 is connected to a portion of the downstream side steering shaft 68 that projects downwards from the link supporting portion 212 to thereby be connected to the tie-rod 67.

### <Operation of Steering Force Transmission Mechanism 6>

Next, by the use of Fig. 9, the operation of the steering force transmission mechanism 6 will be described. When referred to in the following description, clockwise and counterclockwise represent turning directions as seen from the rider.

When the rider turns the handlebar 23 clockwise as indicated by an arrow P, the upstream side steering shaft 60 that is fixed to the handlebar 23 turns clockwise. Then, the connecting member 80 that is fixed to the upstream side steering shaft 60 is displaced to the front.

To describe this in detail, when the rear fixing portion 82 of the rear element 81 of the connecting member 80 is displaced clockwise together with the upstream side steering shaft 60, the rear thread portion 83 is displaced to the front in the front-and-rear direction of the body frame 21. The bolt member 84 and the front thread portion 87 of the front element 85 are displaced to the front in the front-and-rear direction of the body frame 21 as the rear thread portion 83 is displaced so.

When the front thread portion 87 of the front element 85 is displaced to the front, the front fixing portion 86 turns the downstream side steering shaft 68 clockwise. When the downstream side steering shaft 68 turns clockwise, the tie-rod 67 is displaced to the right in the left-and-right direction of the body frame 21.

As has been described above by using Figs. 4 and 5, the tie-rod 67 turns the right front wheel 32 clockwise about the right center axis Y and turns the left front wheel 31 clockwise about the left center axis X via the middle transmission plate 61, the right transmission plate 63, the left transmission plate 62, the right bracket 327, the left bracket 317 and the like. This turns the right front wheel 32 and the left front wheel 31 to the right.

Fig. 8 is a side view of the vehicle 1 that is standing upright and which is kept not steered at all. In the vehicle 1 that is standing upright and which is kept not steered at all, a front steering axis b of the downstream side steering shaft 68 looks like overlapping the left center axis X, the right center axis Y and the middle center axis Z.

On the middle upper axis M (the link axis) of the upper cross member 51, a distance D1 between the downstream side steering shaft 68 and the upper cross member 51 is smaller than a distance D2 between the upstream side steering shaft 60 and the upper cross member 51. Namely, since the upper cross member 51 is disposed in the position that lies nearer to the downstream side steering shaft 68 than the upstream side steering shaft 60, the upper cross member 51 is provided in the position where the upper cross member 51 easily interferes with the downstream side steering shaft 68.

In addition, when seen from the side of the vehicle 1 that is standing upright and which is kept not steered at all, a distance (denoted by 0 in the illustrated example) between the downstream side steering shaft 68 and the right center axis Y is smaller than a distance D3 between the upstream side steering shaft 60 and the right center axis Y. Namely, since the downstream side steering shaft 68 lies nearer to the right center axis Y than the upstream side steering shaft 60, compared with the upstream side steering shaft 60, the downstream side steering shaft 68 is provided in the position where the downstream side steering shaft 68 easily interferes with the upper cross member 51 and the lower cross member 52 of the link mechanism 5 that is disposed on the circumference of the right center axis Y.

In this embodiment, when seen from the side of the vehicle 1 that is standing upright and which is kept not steered at all, the center axis of the downstream side steering shaft 68 is described as it looking like overlapping the right center axis Y, however, the invention is not limited to this configuration. For example, when seen from the side of the vehicle 1 that is standing upright and which is kept not steered at all, the center axis of the downstream side steering shaft 68 may deviate slightly to the front or rear of the right center axis Y.

Further, when seen from the side of the vehicle 1 that is standing upright and which is kept not steered at all, a distance (denoted by 0 in the illustrated example) between the upstream side steering shaft 60 and the rear steering axis a, which is the turning axis of the handlebar 23, is smaller than a distance D4 between the downstream side steering shaft 68 and the rear steering axis a. In this embodiment, the center steering axis, which is the turning axis of the handlebar 23, coincides with the rear steering axis a, which is the turning axis of the upstream side steering shaft 60. Namely, the upstream side steering shaft 60 is provided in the position that lies nearer to the handlebar 23 than the downstream side steering shaft 68.

In this embodiment, the turning axis (the rear steering axis a) of the upstream side steering shaft 60 is described as coinciding with the turning axis of the handlebar 23, however, the invention is not limited to this configuration. For example, the turning axis of the upstream side steering shaft 60 may deviate to the front or rear, or to the right or left of the turning axis of the handlebar 23.

### <Steer Lock Mechanism 40>

Next, a steer lock mechanism 40 will be described by the use of Figs. 8 and 9. The steer lock mechanism 40 is a mechanism for locking the right front wheel 32 and the left front wheel 31 so as not to turn. For example, the steer lock mechanism 40 is used to lock the right front wheel 32 and the left front wheel 31 so as not to turn for theft prevention. In this embodiment, the steer lock mechanism 40 is a so-called cylinder lock type steer lock mechanism 40. The steer lock mechanism 40 includes a main switch device 41 (an example of a second portion) and a pin receiving portion 42 (an example of a first portion).

The main switch device 41 is fixed to the vehicle body frame 21. The main switch device 41 includes a key insertion port 43. The key insertion port 43 opens upwards. The main switch device 41 has a pin 44 that can be displaced in the front-and-rear direction. The pin 44 is provided so as to project to the front from a front surface of the main switch device 41. The pin 44 can take an advanced position where the pin 44 projects to the front and a withdrawal position where the pin 44 is situated behind the advanced position according to the turning angle of a key inserted into the key insertion port 43.

The pin receiving portion 42 is fixed directly or indirectly to the upstream side steering shaft 60. When the upstream side steering shaft 60 turns as the handlebar 23 turns, the pin receiving portion 42 also turns. In contrast with this, although the handlebar 23 turns, the body frame 21 is kept unrelated in motion from the tuning of the handlebar 23 and does not turn. Namely, the main switch device 41 and the pin receiving portion 42 can be displaced relative to each other.

The pin receiving portion 42 includes a pin receiving hole 45. The pin receiving hole 45 is a hole that extends in the front-and-rear direction. The pin receiving hole 45 opens to a rear surface of the pin receiving portion 42. The pin receiving hole 45 is so sized that the pin 44 of the main switch device 41 can be inserted thereinto. In this embodiment, the pin receiving hole 45 is provided in the pin receiving portion 42 so that with the handlebar 23 turned through a predetermined angle to the left from a neutral position, the opening of the pin receiving portion 42 faces the pin 44 in a squared fashion.

In such a state that the steer lock mechanism 40 is kept in an in operable state, the steer lock mechanism 40 enables the right front wheel 32 and the left front wheel 31 to be steered or turned. In such a state that the steer lock mechanism 40 is kept in an in operable state, the pin 44 stay in the withdrawal position, and the pin 44 is not inserted into the pin receiving hole 45.

In such a state that the rider turns the handlebar 23 through the predetermined angle to the left from the neutral position, when the rider turns the key inserted into the key insertion port 43 counterclockwise, for example, the steer lock mechanism 40 is put into an operable state. With the steer lock mechanism 40 kept in the operable state, the right front wheel 32 and the left front wheel 31 cannot be turned.

When the steer lock mechanism 40 is shifted from the inoperable state to the operable state, a cylinder mechanism, not shown, is activated, whereby the pin 44 projects to the front to stay in the advanced position. Then, the pin 44 is inserted into the pin receiving portion 42, whereby the main switch device 41 and the pin receiving portion 42 cannot be displaced relative to each other. Even though a force attempting to turn the handlebar 23 is inputted into the handlebar 23, the pin 44 is in abutment with an inner surface of the pin receiving hole 45, whereby the handlebar 23 is prevented from being turned. Owing to this, the steering force applied to the handlebar 23 is not transmitted to the downstream side steering shaft 68, the right front wheel 32 and the left front wheel 31, whereby the right front wheel 32 and the left front wheel 31 are not turned.

In this way, the steer lock mechanism 40 includes the main switch device 41 and the pin receiving portion 42 which can be displaced relative to each other and prevents the right front wheel 32 and the left front wheel 31 from being turned by preventing the main switch device 41 from being displaced relative to the pin receiving portion 42.

The pin receiving portion 42 may be provided directly on the upstream side steering shaft 60 or may be provided, for example, on a member such as a handlebar post that is displaced together with the upstream side steering shaft 60 when the upstream side steering shaft 60 turns. Where to provide the main switch device 41 including the pin 44 is not limited to the body frame 21 as long as the relative displacement of the pin receiving portion 42 can be prevented, and thus, the main switch device 41 should be provided on the member that is displaced together with the upstream side steering shaft 60 when the upstream side steering shaft 60 turns. In addition, the mechanism of the steer lock mechanism 40 is not limited to the combination of the pin 44 and the pin receiving hole 45 that prevents the relative displacement of the pin 44 thereto as described above as long as the relative displacement between the pin 44 and the pin receiving hole 45 can be prevented.

On the contrary to the configuration described above, the main switch 41 may be fixed to the upstream side steering shaft 60 and the pin receiving portion 42 may be fixed to the body frame 21.

### <Steer Stopper Mechanism 70>

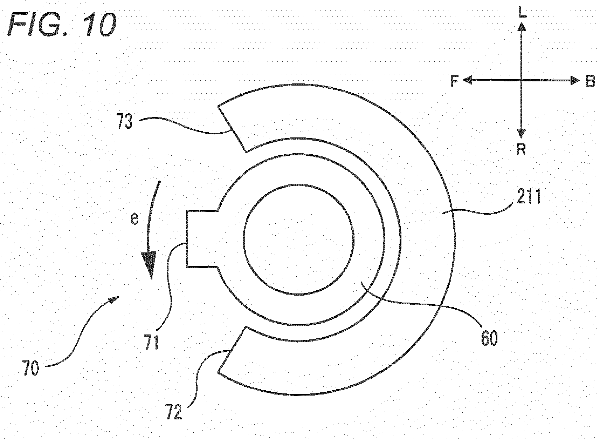

Next, a steer stopper mechanism 70 will be described by the use of Figs. 8 and 10. Fig. 10 is a bottom view of the upstream side steering shaft 60.

The steer stopper mechanism 70 is a mechanism for restricting a maximum steering angle of the right front wheel 32 and the left front wheel 31. The maximum steering angle means an angle at which the right front wheel 32 and the left front wheel 31 cannot be turned to any greater angle than the angle even when the rider attempts to turn the right front wheel 32 and the left front wheel 31 further. The maximum steering angle means an angle that is set by a designer of the vehicle 1 with a view to avoiding the interference of constituent members of the vehicle 1 that would be caused as the vehicle 1 is steered.

As shown in Fig. 10, the steer stop mechanism 70 includes a block 71 (an example of a third portion) that is provided at a lower portion of the upstream side steering shaft 60 and a right abutment wall 72 and a left abutment wall 73 (an example of a fourth portion) that are provided at a lower portion of the headstock 211. A lower portion of the headstock 211 is partially cut out in a circumferential direction to thereby form the right abutment wall 72 and the left abutment wall 73. Since the upstream side steering shaft 60 is supported on the headstock 211 so as to turn, the block 71 can be displaced relative to the right abutment wall 72 and the left abutment wall 73.

When turning the right front wheel 32 and the left front wheel 31 through a steering angle that is equal to or smaller than the maximum steering angle, the upstream side steering shaft 60 turns relative to the headstock 211 without the block 71 being brought into abutment with the right abutment wall 72 and the left abutment wall 73.

In contrast with this, when the right front wheel 32 and the left front wheel 31 are turned rightwards to a rightward maximum steering angle, in case the rider attempts to turn the handlebar 23 clockwise as seen from the rider (a direction indicated by an arrow e in Fig. 10) to an angle exceeding that rightward maximum steering angle, the block 71 is brought into abutment with the right abutment wall 72 to thereby stop any further displacement of the block 71 relative to the right abutment wall 72. This prevents the right front wheel 32 and the left front wheel 31 from being turned through any greater angle than the rightward maximum steering angle.

Similarly, when the right front wheel 32 and the left front wheel 31 are turned leftwards to a leftward maximum steering angle, in case the rider attempts to turn the handlebar 23 counterclockwise as seen from the rider to an angle exceeding that leftward maximum steering angle, the block 71 is brought into abutment with the left abutment wall 73 to thereby stop any further displacement of the block 71 relative to the left abutment wall 73. This prevents the right front wheel 32 and the left front wheel 31 from being turned through any greater angle than the leftward maximum steering angle.

In this way, the steer stopper mechanism 70 restricts the maximum steering angle of the right front wheel 32 and the left front wheel 31 by stopping the relative displacement of the block 71 to the right abutment wall 72 and the left abutment wall 73 so as to prevent the right front wheel 32 and the left front wheel 31 from being steered or turned over the maximum steering angle.

The block 71 may be provided directly on the upstream side steering shaft 60 or may be provided, for example, on the member such as the handlebar post that is displaced together with the upstream side steering shaft 60 when the upstream side steering shaft 60 turns. Where to provide the right abutment wall 72 and the left abutment wall 73 is not limited to the body frame 21 such as the headstock 211 as long as the relative displacement of the block 71 can be prevented, and thus, the block 71 should be provided on the member that is displaced together with the upstream side steering shaft 60 when the upstream side steering shaft 60 turns. In addition, the mechanism of the steer stopper mechanism 70 is not limited to the combination of the block 71 and the abutment walls 72, 73 that prevent the relative displacement of the block 71 thereto as described above as long as the relative displacement between the block 71 and the abutment walls 72, 73 can be prevented.

As has been described heretofore, in this embodiment, in the steer lock mechanism 40 and the steer stopper mechanism 70, the pin receiving portion 42 (the example of the first portion) and the block 71 (the example of the third portion) are provided on the member that is displaced together with the upstream side steering shaft 60 (the example of the rear shaft member) when the upstream side steering shaft 60 turns or the upstream side steering shaft 60, and the main switch device 41 (the example of the second portion) and the right abutment wall 72 and the left abutment wall 73 (the example of the fourth portion) are provided on the member that is displaced together with the upstream side steering shaft 60 when the upstream side steering shaft 60 turns.

In the vehicle 1 according to the invention, the steering force transmission mechanism 6 that transmits the steering force inputted into the steering force input portion to the right front wheel 32 and the left front wheel 31 includes the upstream side steering shaft 60 into which the steering force is inputted from the handlebar 23, the downstream side steering shaft 68 and the connecting member 80 that connects together the downstream side steering shaft 68 and the upstream side steering shaft 60. Owing to this, compared with the case where the steering force that is inputted into the steering force input portion is transmitted to the right front wheel 32 and the left front wheel 31 by the single steering shaft, the degree of freedom in designing the arrangement of the handlebar 23 becomes high. Owing to this, the handlebar 23 can be disposed in a position or posture that enables a rider to use the handlebar 23 easily.

Further, the vehicle 1 is prevented from being enlarged in size by the following reason.

A certain degree of rigidity is required individually on the steer lock mechanism 40 and the steer stopper mechanism 70.

High rigidity is required on the steer lock mechanism 40 so as to cope with an external force that is exerted on the right front wheel 32, the left front wheel 31 or the handlebar 23 in such a state that the steer lock mechanism 40 locks the right front wheel 32 and the left front wheel 31 so as not to be steered. In addition, high rigidity is also required on the member on which the steer lock mechanism 40 is mounted.

Similarly, high rigidity is required on the steer stopper mechanism 70 so as to cope with an external force that is exerted on the right front wheel 32, the left front wheel 31 and the handlebar 23 in an attempt to increase further the steering angle of the right front wheel 32 and the left front wheel 31 in such a state that the steer stopper mechanism 70 is restricting the steering angle of the right front wheel 32 and the left front wheel 31 after the right front wheel 32 and the left front wheel 31 are steered to the maximum steering angle. In addition, high rigidity is also required on the member on which the steer stopper mechanism 70 is mounted.

Owing to this, being different from this embodiment, in the event that the steer lock mechanism is provided on the upstream side steering shaft and the steer stopper mechanism is provided on the downstream side steering shaft, the rigidity of both the upstream side steering shaft and the downstream side steering shaft needs to be increased. This requires a large diameter member to be used for both the upstream side steering shaft and the downstream side steering shaft, resulting in the enlargement in size of the vehicle.

Then, in case the steer lock mechanism 40 and the steer stopper mechanism 70 are provided either of the downstream side steering shaft 68 and the upstream side steering shaft 60 of the steering force transmission mechanism 6, the rigidity of either of the downstream side steering shaft 68 and the upstream side steering shaft 60 should be secured. Owing to this, the steering force transmission mechanism 6 can be configured compact, compared with the case where the steer lock mechanism 40 is provided on either of the downstream side steering shaft 68 and the upstream side steering shaft 60 of the steering force transmission mechanism 6 and the steer stopper mechanism 70 is provided on the other of the downstream side steering shaft 68 and the upstream side steering shaft 60 of the steering force transmission mechanism 6.

Then, the inventor of the invention has considered that both the steer lock mechanism 40 and the steer stopper mechanism 70 are provided on either of the downstream side steering shaft 68 and the upstream side steering shaft 60.

Firstly, the inventor of the invention has studied the provision of the steer lock mechanism 40 and the steer stopper mechanism 70 on the downstream side steering shaft 68.

In the target vehicle 1 of the invention, on the link axis (the middle upper axis M) of the upper cross member 51, the distance between the downstream side steering shaft 68 and the upper cross member 51 is smaller than the distance between the upstream side steering shaft 60 and the upper cross member 51. Namely, the upper cross member 51 is provided in the position that lies nearer to the downstream side steering shaft 68 than the upstream side steering shaft 60. Since the upper cross member 51 receives an impact force from a road surface, the upper cross member 51 is configured as a thick member, and hence, the cross member has high rigidity. Owing to this, it is considered reasonable to provide the steer lock mechanism 40 and the steer stopper mechanism 70 by using the upper cross member 51 lying around the downstream side steering shaft 68 or the highly rigid member that supports the upper cross member 51.

However, the inventor of the invention has noticed that the upper cross member 51 is configured relatively large to secure the high rigidity and that the movable range where the large upper cross member 51 moves is also enlarged. Additionally, since the rigidity is required on each of the steer lock mechanism 40 and the steer stopper mechanism 70, the steer lock mechanism 40 and the steer stopper mechanism 70 also become relatively large in size. Namely, the inventor has noticed that since both the members that may interfere with each other are large in size, an attempt to provide the steer lock mechanism 40 and the steer stopper mechanism 70 on the circumference of the downstream side steering shaft 68 has to enlarge the size of the vehicle 1.

Then, the inventor of the invention has paid attention to the circumference of the upstream side steering shaft 60 of the steering force transmission mechanism 6. Since the upstream side steering shaft 60 is provided in the position that lies farther away from the link mechanism 5 than the downstream side steering shaft 68, it becomes difficult for the upstream side steering shaft 60 to interfere with the other members. Then, the inventor of the invention has studied the provision of the steer lock mechanism 40 and the steer stopper mechanism 70 on the circumference of the upstream side steering shaft 60.

As a result of an extended study of the rigidity required on the upstream side steering shaft 60 by the inventor, the inventor has noticed that the rigidity of the upstream side steering shaft 60 and the supporting rigidity of the upstream side steering shaft 60 need to be set high in order to bear a steering force that is inputted by the rider. The steering force that is inputted by the rider includes a force component that is inputted when the rider attempts to turn the handlebar 23 and a force component that is used by the rider to displace the handlebar 23 in the left-and-right direction when the rider attempts to cause the vehicle to lean in the left-and-right direction.

Then, the inventor of the invention has noticed that in case the steer lock mechanism 40 and the steer stopper mechanism 70 are provided on the highly rigid upstream side steering shaft 60 and the member that supports the upstream side steering shaft 60 with high rigidity and which is displaced relative to the upstream side steering shaft 60 when the upstream side steering shaft 60 turns, a highly rigid member does not have to be used only for the purpose of provision of the steer lock mechanism 40 and the steer stopper mechanism 70, which makes it difficult for the vehicle 1 to be enlarged in size.

Then, by providing the steer lock mechanism 40 and the steer stopper mechanism 70 on the member that is displaced together with the upstream side steering shaft 60 or the upstream side steering shaft 60 and the member that is displaced relative to the upstream side steering shaft 60 when the upstream side steering shaft 60 turns, the vehicle 1 including the steer lock mechanism 40 and the steer stopper mechanism 70 is provided that prevents the vehicle 1 from being enlarged in size while seeking for the enhancement in usability of the handlebar 23 by the rider.

For example, in the event that a grip end of the handlebar 23 is brought into contact with the ground when the vehicle is fallen down whereby a great load is inputted into the handlebar 23, in case the steer lock mechanism 40 and the steer stopper mechanism 70 are provided on the upstream side steering shaft 60, the load can be borne by the steer lock mechanism 40 and the steer stopper mechanism 70. Owing to this, since a great load is not exerted on the member lying downstream of the upstream side steering shaft 60, the strength required on the member located in the downstream side can be reduced, whereby the vehicle 1 is easily made small in size and light in weight.

Owing to this, in case the steer lock mechanism 40 and the steer stopper mechanism 70 are provided on the circumference of the upstream side steering shaft 60, a great load is not transmitted to the connecting member 80 and the downstream side steering shaft 68 that are situated downstream of those mechanisms. Owing to this, since the strength that is required on the connecting member 80 and the downstream side steering shaft 68 can be reduced, the connecting member 80 and the downstream side steering shaft 68 are easily made in compact in size and light in weight, thereby making it possible to enlargement in size of the vehicle 1.
(2) As shown in Fig. 9, in this embodiment, the body frame 21 has the right frame 92 and the left frame 91 that is provided on the left of the right frame 92, the link supporting portion 212 (an example of a front shaft supporting portion) that supports the downstream side steering shaft 68 so as to turn is supported by the right frame 92 and the left frame 91, and the headstock 211 (an example of a rear shaft supporting portion) that supports the upstream side steering shaft 60 so as to turn is provided on the right frame 92 and the left frame 91 behind the connecting portion that connects the right frame 92 and the left frame 91 with the link supporting portion 212 in the front-and-rear direction of the body frame 21.

According to the vehicle 1 configured as described under (2), the headstock 211 is supported by the right frame 92 and the left frame 91 , whereby the headstock 211 is supported with high rigidity in the left-and-right direction.

The right frame 92 and the left frame 91 are preferably frames that support the engine unit 25 as shown in Fig. 1. Particularly high rigidity is required on the portion of the body frame 21 which supports the engine unit 25. Then, it is preferable that the headstock 211 is supported by using the right frame 92 and the left frame 91 whose rigidity is enhanced to support the engine unit 25.

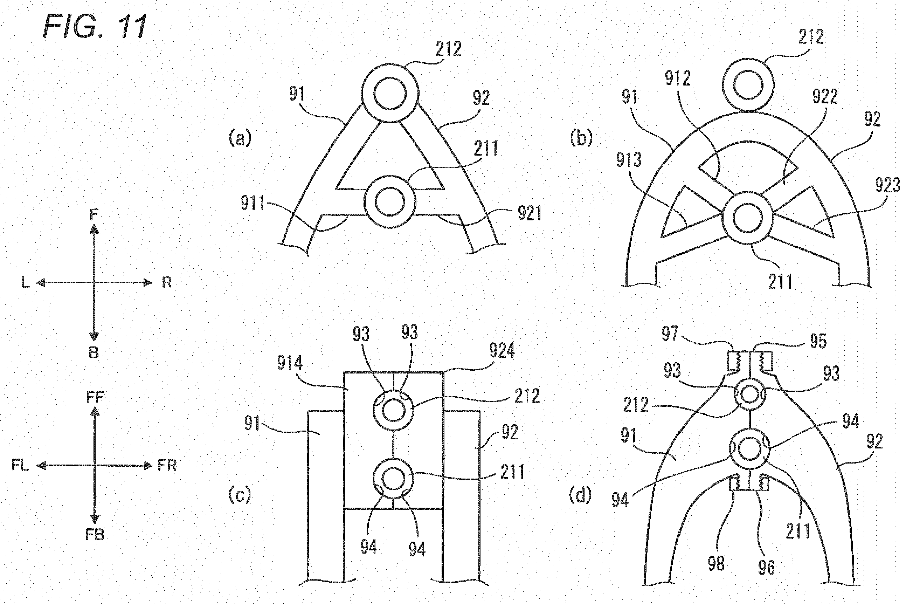

The right frame 92 and the left frame 91 are not limited to those shown in Fig. 9. Fig. 11 is a plan view showing schematically the link supporting portion 212, the headstock 211, the right frame 92, and the left frame 91. The right frame 92 and the left frame 91 may be configured as shown in Fig. 11.

In a configuration shown in Fig. 11A, the link supporting portion 212 is supported by a front end of a right frame 92 and a front end of a left frame 91. A right rear portion of the link supporting portion 212 is supported by the front end of the right frame 92. A left rear portion of the link supporting portion 212 is supported by the front end of the left frame 91.

The headstock 211 is supported by a right middle frame 921 that extends to the left from the right frame 92 and a left middle frame 911 that extends to the right from the left frame 91 behind the link supporting portion 212 in the front-and-rear direction of the body frame 21. A right portion of the headstock 211 is supported by a left end of the right middle frame 921. A left portion of the headstock 211 is supported by a right portion of the left middle frame 911.

In a construction shown in Fig. 11B, a right frame 92 and a left frame 91 are integrated into one unit of front end. The link supporting portion 212 is supported at a front end of the right frame 92 and the left frame 91 integrated. A rear end portion of the link supporting portion 212 is supported at the front end of the right frame 92 and the left frame 91 integrated.

The headstock 211 is supported, behind the link supporting portion 212, by a first right middle frame 922 that extends to the left from the right frame 92, a second right middle frame 923 that extends to the left from the right frame 92 behind the first right middle frame 922, a first left middle frame 912 that extends to the right from the left frame 91 and a second left middle frame 913 that extends to the right from the left frame 91 behind the first left middle frame 912.

A right front portion of the headstock 211 is supported by the first right middle frame 922, and a right rear portion of the headstock 211 is supported by the second right middle frame 923. A left front portion of the headstock 211 is supported by the first left middle frame 912, and a left rear portion of the headstock 211 is supported by the second left middle frame 913.

In a construction shown in Fig. 11C, a substantially rectangular parallelepiped right bock body 924 is fixed to a left front portion of a right frame 92. A substantially rectangular parallelepiped left block body 914 is fixed to a right front portion of a left frame 91. The right block body 924 and the left block body 914 are connected together.

First recess portions 93 and second recess portions 94 that are situated behind the first recess portions 93 are provided on surfaces of the right block body 924 and the left block body 914 that face each other. The first recess portion 93 on the right block body 924 and the first recess portion 93 on the left block body 914 form a hole portion into which the link supporting portion 212 is fixedly inserted. The second recess portion 94 on the right block body 924 and the second recess portion 94 on the left block body 914 form a hole portion into which the headstock 211 is fixedly inserted.

In this configuration, in place of the substantially rectangular parallelepiped block bodies, plate members may be used.

In a construction shown in Fig. 11D, front tightening portions 95 that protrude to the front are provided individually at front ends of surfaces of front portions of a right frame 92 and a left frame 91 which face each other. Rear tightening portions 96 that protrude to the rear are provided individually at rear ends of the surfaces of front portions of the right frame 92 and the left frame 91 which face each other.

By matching the right frame 92 and the left frame 91 face to face together, a front end portion of the right frame 92 and a front end portion of the left frame 91 form a single front tightening portion 95, and a rear end portion of the right frame 92 and a rear end portion of the left frame 91 form a single rear tightening portion 96. A nut member 97 is tightened on to the front tightening portion 95 so formed, and a nut member 98 is tightened on to the rear tightening portion 96, whereby the right frame 92 and the left frame 91 are fixed together strongly and rigidly.
the first recess portions 93 and the second recess portions 94 that are situated behind the first recess portions 93 are provided on the surfaces of the front portion of the right frame 92 and the front portion of the left frame 91 that face each other. The first recess portion 93 on the right frame 92 and the first recess portion 93 of the left frame 91 form the hole portion into which the link supporting portion 212 is fixedly inserted. The second recess portion 94 on the right frame 92 and the second recess portion 94 of the left frame 91 form the hole portion into which the headstock 211 is fixedly inserted.

By setting a diameter of the hole portion that are formed by the first recess portions 93 to be slightly smaller than an outside diameter of the link supporting portion 212, the link supporting portion 212 can be supported strongly and rigidly by the right frame 92 and the left frame 91 in a simple fashion by tightening the front tightening portion 95 and the rear tightening portion 96 by the nut members 97, 98, respectively.

Alternatively, by setting a diameter of the hole portion that are formed by the second recess portions 94 to be slightly smaller than an outside diameter of the headstock 211, the headstock 211 can be supported strongly and rigidly in a simple fashion by the right frame 92 and the left frame 91 by tightening the front tightening portion 95 and the rear tightening portion 96 by the nut members 97, 98, respectively.
(3) In this embodiment,
   the body frame 21 has the link supporting portion 212 (the example of the front shaft supporting portion) having the pivotable support portion 212b that supports the cross members 51, 52 so as to turn, and
   the downstream side steering shaft 68 penetrates the link supporting portion 212. In this embodiment, the pivotable support portion 212b is a shaft portion that projects to the front or rear from the link supporting portion 212. This pivotable support portion 212b is integrated with the link supporting portion 212. The plate member 512 of the upper cross member 51 is supported by the pivotable support portion 212b that project to the front from the link supporting portion 212 so as to turn. The front plate member 522a of the lower cross member 52 is supported so as to turn by the pivotable support portion 212b that projects to the front from the link supporting portion 212, and the rear plate member 522b is supported so as to turn by the pivotable support portion 212b that projects to the rear from the link supporting portion 212.

According to the vehicle 1 described under (3, the following advantageous effect can be provided.

Since the link supporting portion 212 supports both the cross members 51, 52 and the downstream side steering shaft 68 whose turning axes differ from each other, the two members can be supported by the single member, thereby making it possible to increase the number of parts involved. This can restrict the enlargement in size of the vehicle 1.

In addition, according to the vehicle 1 described under (3), the following advantageous effect can be provided.

Since high rigidity is required on the member to which the upper cross member 51 and the lower cross member 52 are attached, the rigidity of the member is set high. In order to ensure high rigidity with a small amount of material, it is desirable to adopt a cylindrical shape. Then, in the vehicle 1 according to this embodiment, the downstream side steering shaft 68 is inserted through the interior of the member that supports the upper cross member 51 and the lower cross member 52, and therefore, the utilization efficiency of the space is enhanced. In addition, the member that supports the upper cross member 51 and the lower cross member 52 and the member that supports the downstream side steering shaft 68 so as to turn are made commonable, and therefore, the number of parts can be reduced.

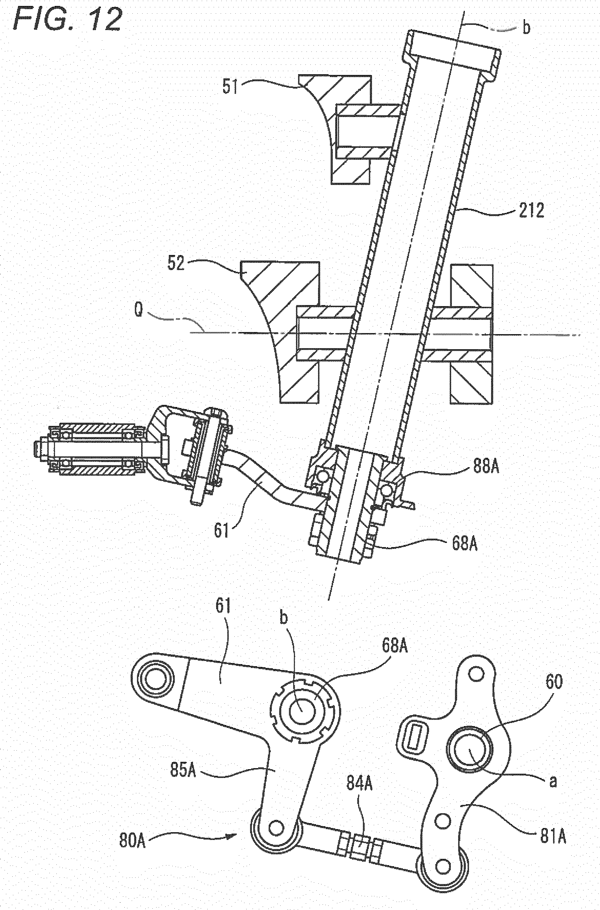

In this embodiment, while the downstream side steering shaft 68 is described as penetrating the cylindrical link supporting portion 212, the invention is not limited thereto. Fig. 12 is a side view showing a link supporting portion 212 and a downstream side steering shaft 68 according to Modified Example 1 of the invention.

As shown in Fig. 12, in Modified Example 1, a downstream side steering shaft 68A is provided coaxially with a pipe-shaped link supporting portion 212 at a lower portion of the link supporting portion 212. The downstream side steering shaft 68A is supported by the link supporting portion 212 so as to turn. An outer circumferential surface of the downstream side steering shaft 68A is supported on an inner circumferential surface of a lower end of the pipe-shaped link supporting portion 212 via a bearing 88A. A front element 85A of a connecting member 80A is fixed to the downstream side steering shaft 68A so as not to turn. The front element 85A is integrated with the middle transmission plate 61.

A rear element 81A of the connecting member 80A is fixed to a lower end of the upstream side steering shaft 60 so as not to turn. This rear element 81A is connected to the front element 85A via a bolt member 84A.
(5) In the vehicle 1 according to this embodiment, the upstream side steering shaft 60 is shorter than the downstream side steering shaft 68.
   Since the upstream side steering shaft 60 to which the steering force of the handlebar 23 is transmitted is shorter than the downstream side steering shaft 68, when seen from the side of the vehicle 1, even though an angle formed by the upstream side steering shaft 60 relative to a vertical direction is changed, it becomes difficult for the upstream side steering shaft 60 to interfere with the other members. Owing to this, the steering force input portion is easy to be disposed in the position or posture where the rider can use the steering force input portion easily.
(6) The invention is not limited to the configuration described under (5), and hence, the upstream side steering shaft 60 may be longer than the downstream side steering shaft 68. According to the vehicle 1 configured as described under (6), in the event that the first portion or the second portion of the steer lock mechanism 40 and the third portion and the fourth portion of the steer stopper mechanism 70 are attached to the long upstream side steering shaft 60, the area where the upstream side steering shaft 60 is attached is wide, and therefore, it is easy to provide the steer lock mechanism 40 and the steer stopper mechanism 70 in the position where the interference thereof with other members is avoided. In addition, since the area where the upstream side steering shaft 60 is wide, the steer lock mechanism 40 and the steer stopper mechanism 70 can be provided at a plurality of locations, this enhancing the theft preventing effect.
(7) As shown in Fig. 9, in this embodiment, when seen from the top of the vehicle 1, at least part of the steer lock mechanism 40 may be situated behind the upstream side steering shaft 60. According to the vehicle 1 described under (7), the link mechanism 5 is situated ahead of the upstream side steering shaft 60. Owing to this, in case at least of the steer lock mechanism 40 is situated behind the upstream side steering shaft 60, the interference between the steer lock mechanism 40 with the link mechanism 5 is prevented easily.

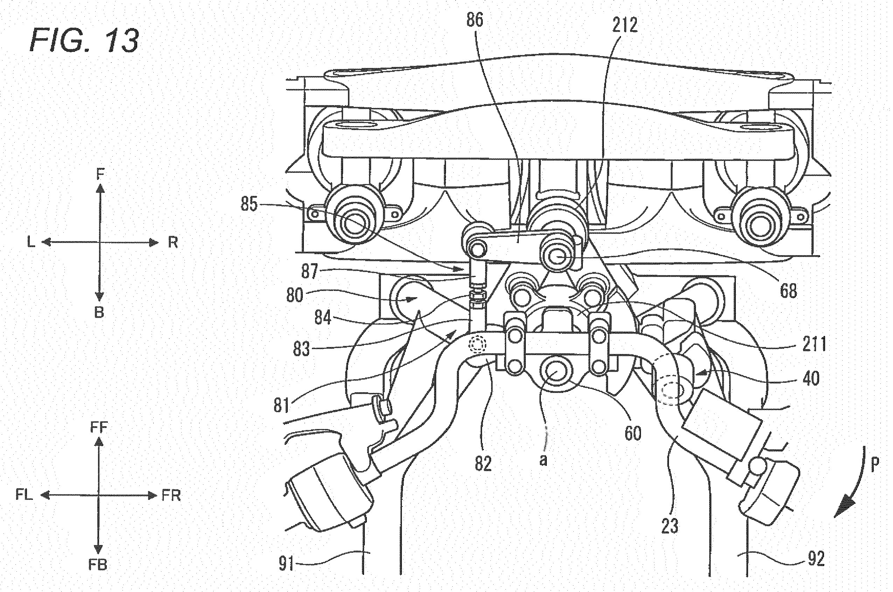

   Fig. 13 is a top view of a steering force transmission mechanism 6 of a vehicle according to Modified Example 2 of the invention.
(8) as shown in Fig. 13, when seen from the top of a vehicle 1, at least part of the connecting member 80 is situated either on the right or the left of the rear steering axis a (an example of a rear axis) in relation to the left-and-right direction of the body frame 21, and when seen from the top of the vehicle 1, at least part of the steer lock mechanism 40 is situated either on the right or the left of the rear steering axis a in relation to the left-and-right direction of the body frame 21.
   According to the vehicle 1 described under (8), it is easy to prevent the interference of the steer lock mechanism 40 with the connecting member 80.
   In Modified Example 2 shown in Fig. 13, when seen from the top of the vehicle 1, the bolt member 84 of the connecting member 80 is situated on the left of the rear steering axis a, and the main switch device 41 of the steer lock mechanism 40 is situated on the right of the rear steering axis a.
(9) In the embodiment, the connecting member 80 transmits the turn of the upstream side steering shaft 60 to the downstream side steering shaft 68 by the link mechanism having at least one joint.
   According to the vehicle 1 described under (9), in the event that the upstream side steering shaft 60 is wanted to be spaced farther away from the downstream side steering shaft 68 to avoid the interference of the steer lock mechanism 40 or the steer stopper mechanism 70 with the link mechanism 5, in case the downstream side steering shaft 68 and the upstream side steering shaft 60 are connected together by the long link, the connecting member 80 can be configured compact in size.
(4) In the embodiment, the steering force transmission mechanism 6 is described as including the upstream side steering shaft 60 and the downstream side steering shaft 68, however, the invention is not limited to the mechanism in which the steering force transmission mechanism 6 uses the two shaft to transmit a steering force.

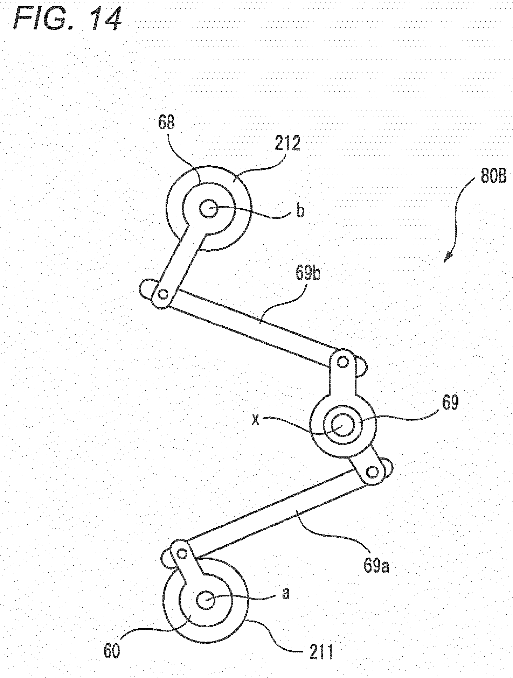

(4) Fig. 14 is a schematic top view of a connecting member 80B of a vehicle 1 according to Modified Example 3 of the invention. As shown in Fig. 14, at least one middle shaft member 69 is provided between the downstream side steering shaft 68 and the upstream side steering shaft 60. The connecting member 80B may be a link that is connected to the downstream side steering shaft 68 or the upstream side connecting shaft 60 via a turning axis x that is different from the front steering axis b and the rear steering axis a so as to turn and which is displaced as the upstream side steering shaft 60 turns to thereby turn the downstream side steering shaft 68. The connecting member 80B shown includes the middle shaft member 69, a first link member 69a and a second link member 69b.
   The turn of the upstream side steering shaft 60 is transmitted to the middle shaft member 69 via the first link member 69a. The turn of the middle shaft member 69 is transmitted to the downstream side steering shaft 68 via the second link member 69b. In this way, the steering force transmitted to the upstream side steering shaft 60 is transmitted to the downstream side steering shaft 68 via the middle shaft member 69. In this way, the connecting member 80B may be configured so as to transmit the turn of the upstream side steering shaft 60 to the downstream side steering shaft 68 by the mechanism including one or more shafts.
   According to the vehicle 1 of Modified Example 3 configured in the way described above, the connecting member 80B is easy to be configured and the degree of freedom in designing the steering force transmission mechanism 6 is high, and therefore, the usability of the handlebar 23 by the rider can be enhanced further.
(10) In the vehicle 1 according to the embodiment, as shown in Figs. 2 and 8, the cross member has the upper cross member 51 and the lower cross member 52 that is provided below the upper cross member 51, and the body frame 21 has the upper supporting portion C that supports the upper cross member 51 so as to turn and the lower supporting portion I that supports the lower cross member 52 so as to turn. As shown in Fig. 2, the front shaft member 68 may penetrate the body frame 21 (the link supporting portion 212) so that the front shaft member (the downstream side steering shaft 68) passes the upper supporting portion C and the lower supporting portion I when seen from the front of the vehicle 1.
   According to the vehicle 1 configured as described under (10), part (the link supporting portion 212) of the body frame 21 where the upper supporting portion C and the lower supporting portion I are provided is given enhanced rigidity in order to support the upper cross member 51 and the lower cross member 52 with high rigidity. The downstream side steering shaft 68 is provided so as to penetrate the link supporting portion 212 (part of the body frame) whose rigidity is so enhanced, and therefore, the vehicle 1 can be configured compact in size while avoiding the interference of the link mechanism 5 with the steering force transmission mechanism 6.
   In particular, in the event that the part (the link supporting portion 212) of the body frame where the upper supporting portion C and the lower supporting portion I are provided is made up of the pipe-shaped member, the link supporting portion 212 can be configured highly rigid and light in weight. In case the downstream side steering shaft 68 is caused to penetrate the interior of the pipe-shaped link supporting portion 212, the vehicle 1 can be configured compact in size while avoiding the interference of the link mechanism 5 with the steering force transmission mechanism 6.
(11) In the vehicle 1 according to the embodiment, as shown in Fig. 8, the body frame 21 may have the link supporting portion 212 that supports the cross member (the upper cross member 51 and the lower cross member 52) so as to turn, the lower cross member 52 may have the front cross element (the front plate member 522a) that is situated ahead of the link supporting portion 212 and the rear cross element (the rear plate member 522b) that is situated behind the link supporting portion 212, and
   the front axis b of the front shaft member (the downstream side steering shaft 68) may be situated between the front end of the front plate member 522a and the rear end of the rear plate member 522b.
   According to the vehicle 1 configured as described under (11), when the link mechanism 5 is activated to operate, the front plate member 522a and the rear plate member 522b turn about the link axes (the middle upper axis M and the middle lower axis) that extend in the front-and-rear direction of the body frame 21. Consequently, even though the downstream side steering shaft 68 is provided between the front plate member 522a and the rear plate member 522b, the downstream side steering shaft 68 does not interfere with the front plate member 522a and the rear plate member 522b when the link mechanism 5 is activated to operate. Thus, the vehicle 1 can be configured compact in size while preventing the interference.
(12) In the vehicle 1 according to the embodiment, as shown in Figs. 8 and 9, the body frame 21 may have the pipe-shaped link supporting portion 212 that supports the cross member (the upper cross member 51 and the lower cross member 52) so as to turn, the front shaft member (the downstream side steering shaft 68) may be provided coaxially with the pipe-shaped link supporting portion 212, and at least part of the downstream side steering shaft 68 may be inserted into the interior of the pipe-shaped link supporting portion 212.

According to the vehicle 1 configured as described under (12), the link supporting portion 212 that supports the upper cross member51 and the lower cross member 52 so as to turn is made up of the pipe-shaped member, and therefore, the link supporting portion 212 can be configured highly rigid and light in weight. At least part of the downstream side steering shaft 68 is inserted into the interior of the pipe-shaped link supporting portion 212, and therefore, the vehicle 1 can be configured compact in size while configuring the link supporting portion 212 highly rigid and light in weight and avoiding the interference of the link mechanism 5 with the steering force transmission mechanism 6.

Further, in this embodiment, as shown in Fig. 8, the front plate member 522a of the lower cross member 52 is supported at the front portion of the link supporting portion 212 so as to turn. The rear plate member 522b of the lower cross member 52 is supported at the rear portion of the link supporting portion 212 so as to turn. Since the front plate member 522a and the rear plate member 522b are supported by the single link supporting portion 212, compared with a case where a member that supports the front plate member 522a and a member that supports the rear plate member 522b are prepared separately, the number of parts can be reduced.

In this embodiment, as shown in Fig. 2, when seen from the front of the vehicle 1 that is standing upright and which is kept not steered at all, the lower end of the lower cross member 52 is situated above the upper end of the right front wheel 32 and the upper end of the left front wheel 31.

In addition, as shown in Fig. 4, when seen from the top of the vehicle 1 that is standing upright and which is kept not steered at all along the front steering axis b, at least part of the right front wheel 32 and at least part of the left front wheel 31 may overlap the lower cross member 52.

These configurations can provide the vehicle 1 which is compact in the cross member 52 may be situated between the front steering axis b and the rear steering axis a. The rear cross member 52 can be disposed by making use of the space defined between the front steering axis b and the rear steering axis a, and absorbing device 34 each include the pair of telescopic mechanisms. However, depending upon the specification of the vehicle 1, the number of telescopic mechanisms that the left shock absorbing device 33 and the right shock absorbing device 34 include individually may be one.

In this embodiment, in the left shock absorbing device 33, the left outer tube is described as being situated above the left inner tube and the left front wheel 31 is described as being supported rotatably at the lower portion of the left inner tube, and in the right shock absorbing device 34, the right outer tube is described as being situated above the right inner tube and the right front wheel 32 is described as being supported rotatably at the lower portion of the right inner tube, however, the invention is not limited to this configuration. In the left shock absorbing device, the left inner tube may be situated above the left outer tube and the left front wheel may be supported rotatably at the lower portion of the left outer tube, and in the right shock absorbing device, the right inner tube may be situated above the right outer tube and the right front wheel may be supported rotatably at the lower portion of the right outer tube.

In these embodiments, while the left shock absorbing device 33 is described as being positioned on the left side of the left front wheel 31, and the right shock absorbing device 34 is described as being positioned on the right side of the right front wheel 32, the invention is not limited thereto. The left shock absorbing device 33 may be situated on the right of the left front wheel 31, and the right shock absorbing device 34 may be situated on the left of the right front wheel 32.

In the embodiments, while the engine unit 25 is described as supporting the rear wheel 4 so as to oscillate, the invention is not limited thereto. The engine unit and the rear wheel may be both supported on the body frame so as to oscillate.

In the above embodiment, the vehicle 1 includes the single rear wheel 4. However, the vehicle 1 may include a plurality of rear wheels.

In the embodiments, the center of the rear wheel 4 in the left-and-right direction of the body frame 21 coincides with the center of the space defined between the left front wheel 31 and the right front wheel 32 in the left-and-right direction of the body frame 21. Although the configuration described above is preferable, the center of the rear wheel 4 in the left-and-right direction of the body frame 21 does not have to coincide with the center of the space defined between the left front wheel 31 and the right front wheel 32 in the left-and-right direction of the body frame 21.

In the embodiments, the link mechanism 5 includes the upper cross member 51 and the lower cross member 52. However, the link mechanism 5 may include a cross member other than the upper cross member 51 and the lower cross member 52. The "upper cross member" and the "lower cross member" are merely so called based on their relative positions in relation to the up-and-down direction. The upper cross member does not mean an uppermost cross member in the link mechanism 5. The upper cross member means a cross member that lies above another cross member that lies therebelow. The lower cross member does not mean a lowermost cross member in the link mechanism 5. The lower cross member means a cross member that lies below another cross member that lies thereabove. At least one of the upper cross member 51 and the lower cross member 52 may be made up of two parts such as a right cross member and a left cross member. In this way, the upper cross member 51 and the lower cross member 52 may be made up of a plurality of cross members as long as they maintain the link function.

In the embodiments, the link mechanism 5 constitutes the parallel four joint link system. However, the link mechanism 5 may adopt a double wishbone configuration.

When used in this description to describe a direction or a member, the expression reading "something extends along a certain direction or member" means that it includes a case where something inclines at an angle falling within the range of ± 40 degrees relative to the certain direction or member. When used in this description, the expression reading "something extends in a direction" means that it includes a case where something extends in the direction while being inclined at an angle falling within the range of ± 40 degrees relative to the direction.

### [Description of Reference Numerals and Character]

- 1: vehicle
- 2: vehicle main body portion
- 3: front wheel
- 4: rear wheel
- 5: link mechanism
- 6: steering force transmission mechanism
- 21: body frame
- 22: body cover
- 23: handlebar
- 24: seat
- 25: engine unit
- 31: left front wheel
- 32: right front wheel
- 33: left shock absorbing device
- 34: right shock absorbing device
- 40: steer lock mechanism
- 41: main switch device
- 42: pin receiving portion
- 43: key insertion port
- 44: pin
- 45: pin receiving hole
- 51: upper cross member (an example of a cross member)
- 52: lower cross member
- 53: left side member
- 54: right side member
- 60: upstream side steering shaft (an example of a rear shaft member)
- 61: middle transmission plate
- 62: left transmission plate
- 63: right transmission plate
- 64: middle joint
- 65: left joint
- 66: right joint
- 67: tie-rod
- 68: downstream side steering shaft (an example of a front shaft member)
- 70: steer stopper mechanism
- 71: block
- 72: right abutment wall
- 73: left abutment wall
- 80: connecting member
- 81: rear element
- 82: rear fixing portion
- 83: rear thread portion
- 84: bolt member
- 85: front element
- 86: front fixing portion
- 87: front thread portion
- 92: right frame
- 91: left frame
- 93: first recess portion
- 94: second recess portion
- 95: front tightening portion
- 96: rear tightening portion
- 212a: front shaft supporting portion
- 211: headstock
- 212: link supporting portion
- 213: engine supporting portion
- 221: front cover
- 223: front mudguard
- 224: rear mudguard
- 317: left bracket
- 327: right bracket
- 321: right axle member
- 512: plate member
- 522a: front plate member
- 522b: rear plate member
- 523a: left connecting block
- 523b: right connecting block
- 921: right middle frame
- 911: left middle frame
- 922: first right middle frame
- 923: second right middle frame
- 912: first left middle frame
- 913: second left middle frame
- 914: left block body
- 924: right block body
- A: connecting portion
- C: connecting portion
- E: connecting portion
- G: connecting portion
- H: connecting portion
- I: connecting portion (lower supporting portion)
- M: middle upper axis
- V: rear end edge of movable range of rear plate member
- X: left center axis
- Y: right center axis
- Z: middle center axis

## Claims

1. A vehicle (1) having:
a body frame (21) that can lean to the right of the vehicle (1) when the vehicle (1) turns right and can lean to the left of the vehicle (1) when the vehicle (1) turns left;
a right front wheel (32) and a left front wheel (31) that are provided so as to be aligned side by side in a left-and-right direction of the body frame (21);
a link mechanism (5) that has a cross member (51) that is configured to turn about a link axis (M) that is configured to extend in a front-and-rear direction of the body frame (21) relative to the body frame (21), which is configured to support the right front wheel (32) and the left front wheel (31) so as to be displaced relatively in an up-and-down direction of the body frame (21) and which is configured to support the right front wheel (32) so as to turn about a right steering axis (Y) that is configured to extend in the up-and-down direction of the body frame (21) and is configured to support the left front wheel (31) so as to turn about a left steering axis (X) that is parallel to the right steering axis (Y); and
a steering force transmission mechanism (6) that has a steering force input portion (23) that is situated between the right steering axis (Y) and the left steering axis (X) when seen from the front of the vehicle (1) and which is provided so as to turn about a middle steering axis (a) that is parallel to the right steering axis (Y) and which is configured to transmit a steering force that is inputted into the steering force input portion (23) to the right front wheel (32) and the left front wheel (31),
**characterized in that** the steering force transmission mechanism (6) has:
a rear shaft member (60) into which a steering force is inputted from the steering force input portion (23) and which is supported at the body frame (21) to turn about a rear axis (a);
a front shaft member (68) that is situated ahead of the rear shaft member (60) in relation to the front-and-rear direction of the body frame (21) and which is supported at the body frame (21) to turn about a front steering axis (b);
a connecting member (80) that is configured to transmit the turn of the rear shaft member (60) to the front shaft member (68),
on the link axis (M) of the cross member (51), a distance (D1) between the front shaft member (68) and the cross member (51) being smaller than a distance (D2) between the rear shaft member (60) and the cross member (51),
when seen from a side of the vehicle (1) that is standing upright and which is kept not steered at all, a distance between the front shaft member (68) and the right steering axis (Y) being smaller than a distance (D3) between the rear shaft member (60) and the right steering axis (Y),
when seen from the side of the vehicle (1) that is standing upright and which is kept not steered at all, a distance (D4) between the rear shaft member (60) and the middle steering axis (a) being smaller than a distance between the front shaft member (68) and the middle steering axis (a),
a steer lock mechanism (40) that includes a first portion (42) and a second portion (41) that can be displaced relative to each other and which makes it impossible for the first portion (42) to be displaced relative to the second portion (41) to thereby make it impossible for the right front wheel (32) and the left front wheel (31) to be steered; and
a steer stopper mechanism (70) that comprises a third portion (71) and a fourth portion (73) that can be displaced relative to each other and which is configured to stop the relative displacement of the third portion (71) to the fourth portion (73) so as to prevent the right front wheel (32) and the left front wheel (31) from being steered to or more than a maximum steering angle to thereby restrict the maximum steering angle of the right front wheel (32) and the left front wheel (31), and wherein
in the steer lock mechanism (40) and the steer stopper mechanism (70), the first portion (42) and the third portion (71) are provided on a member that is displaced together with the rear shaft member (60) when the rear shaft member (60) is configured to turn or on the rear shaft member (60), and the second portion (41) and the fourth portion (73) are provided on a member that is displaced relative to the rear shaft member (60) when the rear shaft member (60) is configured to turn.

2. The vehicle according to Claim 1, **characterized in that** the body frame (21) has a right frame (92) and a left frame (91) that is provided on the left of the right frame (92), wherein
a front shaft supporting portion (212) that is configured to support the front shaft member (68) so as to turn is supported by the right frame (92) and the left frame (91), and wherein
a rear shaft supporting portion (211) that is configured to support the rear shaft member (60) so as to turn is provided on the right frame (92) and the left frame (91) behind a connecting portion that is configured to connect the right frame (92) and the left frame (91) with the front shaft supporting portion (212) in the front-and-rear direction of the body frame (21).

3. The vehicle (1) according to Claim 1, **characterized in that** the body frame (21) has a front shaft supporting portion (212) having a pivotable support portion (212b) that supports the cross member (51, 52) so as to turn, and wherein
the front shaft member (68) is configured to penetrate the front shaft supporting portion (212).

4. The vehicle (1) according to Claim 1, **characterized in that** at least one middle shaft member (69) is provided between the front shaft member (68) and the rear shaft member (60), so that a steering force that is transmitted to the rear shaft member (60) is transmitted to the front shaft member (68) via the middle shaft member (69).

5. The vehicle (1) according to Claim 1, **characterized in that** the rear shaft member (60) is shorter than the front shaft member (68).

6. The vehicle (1) according to Claim 1, **characterized in that** the rear shaft member (60) is longer than the front shaft member (68).

7. The vehicle (1) according to Claim 1, **characterized in that** when seen from the top of the vehicle (1), at least part of the steer lock mechanism (40) is situated behind the rear shaft member (60).

8. The vehicle (1) according to Claim 1, **characterized in that** when seen from the top of the vehicle (1) that is standing upright and which is kept not steered at all, at least part of the connecting member (80) is situated either on the right or the left of the rear axis (a) in relation to the left-and-right direction of the body frame (21), and wherein
when seen from the top of the vehicle (1) that is standing upright and which is kept not steered at all, at least part of the steer lock mechanism (40) is situated either on the right or the left of the rear axis (a) in relation to the left-and-right direction of the body frame (21).

9. The vehicle (1) according to Claim 1, **characterized in that** the connecting member (80) is configured to transmit a turn of the rear shaft member (60) to the front shaft member (68) by a link construction having at least one joint.

10. The vehicle (1) according to Claim 1, **characterized in that** the cross member has an upper cross member (51) and a lower cross member (52) that is provided below the upper cross member (51), wherein
the body frame (21) has an upper supporting portion (C) that is configured to support the upper cross member (51) so as to turn and a lower supporting portion (I) that is configured to support the lower cross member (52) so as to turn, and wherein
the front shaft member (68) is configured to penetrate the body frame (21) so that the front shaft member (68) passes the upper supporting portion (C) and the lower supporting portion (I) when seen from the front of the vehicle (1).

11. The vehicle (1) according to Claim 1, **characterized in that** the body frame (21) has a link supporting portion (212) that is configured to support the cross member (51, 52) so as to turn, wherein
the cross member (52) has a front cross element (522a) that is situated ahead of the link supporting portion (212) and a rear cross element (522b) that is situated behind the link supporting portion (212), and wherein
the front steering axis (b) of the front shaft member (68) is situated between a front end of the front cross element (522a) and a rear end of the rear cross element (522b).

12. The vehicle (1) according to Claim 1, **characterized in that** the body frame (21) has a pipe-shaped link supporting portion (212) that is configured to support the cross member (51, 52) so as to turn, wherein
the front shaft member (68) is provided coaxially with the pipe-shaped link supporting portion (212), and wherein
at least part of the front shaft member (68) is inserted into an interior of the pipe-shaped link supporting portion (212).

## Patentansprüche

1. Ein Fahrzeug (1), das aufweist:
einen Körper-Rahmen (21), welcher sich nach rechts von dem Fahrzeug (1) neigen kann, wenn das Fahrzeug nach rechts abbiegt, und sich nach links von dem Fahrzeug (1) neigen kann, wenn das Fahrzeug (1) nach links abbiegt;
ein rechtes Vorder-Rad (32) und ein linkes Vorder-Rad (31), die vorgesehen sind, so dass sie Seite-an-Seite in einer Links- und Rechts-Richtung des Körper-Rahmens (21) ausgerichtet sind;
einen Lenker-Mechanismus (5), der ein Quer-Element (51) hat, das konfiguriert ist, um um eine Lenker-Achse (M) zu drehen, die konfiguriert ist, sich in eine Vorder- und Rück-Richtung des Körper-Rahmens (21) zu erstrecken, relativ zu dem Körper-Rahmen (21), welcher konfiguriert ist das rechte Vorder-Rad (32) und das linke Vorder-Rad (31) zu lagern, so dass dieser relativ in eine Oben- und Unten-Richtung des Körper-Rahmens (21) verlagert ist, und welcher konfiguriert ist, das rechte Vorder-Rad (32) zu lagern, so dass dieses um eine rechte Lenk-Achse (Y) dreht, die konfiguriert ist, sich Oben- und Unten-Richtung des Körper-Rahmens (21) zu erstrecken, und ist konfiguriert das linke Vorder-Rad (31) zu lagern, so dass dieses um eine linke Lenk-Achse (X), die parallel zu der rechten Lenk-Achse (Y) ist, zu drehen; und
einen Lenk-Kraft-Übertragungs-Mechanismus (6), der einen Lenk-Kraft-Eingabe-Abschnitt (23) hat, der zwischen der rechten Lenk-Achse (Y) und der linken Lenk-Achse (X) plaziert ist, wenn gesehen von der Vorder-Seite des Fahrzeugs (1), und welcher vorgesehen ist, um um eine Mittel-Lenk-Achse (a) zu drehen, die parallel zu der rechten Lenk-Achse (Y) ist, und die konfiguriert ist, um eine Lenk-Kraft, die in den Lenk-Kraft-Eingabe-Abschnitt (23) eingegeben ist, zu dem rechten Vorder-Rad (32) und dem linken Vorder-Rad (31) zu übertragen,
**dadurch gekennzeichnet, dass** der Lenk-Kraft-Übertragungs-Mechanismus (6) aufweist:
ein hinteres Wellen-Element (60), in welches eine Lenk-Kraft von dem Lenk-Kraft-Eingabe-Abschnitt (23) eingegeben ist, und welches an dem Körper-Rahmen (21) gelagert ist, um um eine hintere Achse (a) zu drehen;
ein vorderes Wellen-Element (68), das vor dem hinteren Wellen-Element (60) in Bezug auf die Vorder- und Rück-Richtung des Körper-Rahmens (21) plaziert ist, und welches an dem Körper-Rahmen (21) gelagert ist, um um eine vordere Lenk-Achse (b) zu drehen;
ein Verbindungs-Element (80), das konfiguriert ist, um die Drehung des hinteren Wellen-Elements (60) auf das vordere Wellen-Element (68) zu übertragen,
auf der Lenker-Achse (M) des Quer-Elements (51) ist ein Abstand (D1) zwischen dem vorderen Wellen-Element (68) und dem Quer-Element (51) kleiner als ein Abstand (D2) zwischen dem hinteren Wellen-Element (60) und dem Quer-Element (51), wenn gesehen von einer Seite des Fahrzeugs (1), das aufrecht steht und welches insgesamt nicht gelenkt ist, ein Abstand zwischen dem vorderen Wellen-Element (68) und der rechten Lenk-Achse (Y) ist kleiner als ein Abstand (D3) zwischen dem hinteren Wellen-Element (60) und der rechten Lenk-Achse (Y), wenn gesehen von einer Seite des Fahrzeugs (1), das aufrecht steht und welches insgesamt nicht gelenkt ist, ein Abstand (D4) zwischen dem hinteren Wellen-Element (60) und der mittleren Lenk-Achse (A) ist kleiner als ein Abstand zwischen dem vorderen Wellen-Element (68) und der mittleren Lenk-Achse (a),
ein Lenk-Verriegelungs-Mechanismus (40), der einen ersten Abschnitt (42) und einen zweiten Abschnitt (41) beinhaltet, welche relativ zueinander verlagert werden können und welcher es unmöglich macht für den ersten Abschnitt (42) relativ zu dem zweiten Abschnitt (41) verlagert zu werden, um es dadurch unmöglich zu machen für das rechte Vorder-Rad (32) und das linke Vorder-Rad (31) gelenkt zu werden; und
einen Lenk-Stopper-Mechanismus (70), der einen dritten Abschnitt (71) und einen vierten Abschnitt (73) umfasst, die relativ zueinander verlagert werden können, und welcher konfiguriert ist die relative Verlagerung des dritten Abschnitts (71) zu dem vierten Abschnitt (73) zu stoppen, um so zu verhindern, dass das rechte Vorder-Rad (32) und das linke Vorder-Rad (31) zu oder mehr als ein maximaler Lenk-Winkel gelenkt zu werden, um dadurch den maximalen Lenk-Winkel des rechten Vorder-Rads (32) und des linken Vorder-Rads (31) zu beschränken, und wobei
in dem Lenk-Verriegelungs-Mechanismus (40) und dem Lenk-Stopper-Mechanismus (70) der erste Abschnitt (42) und der dritte Abschnitt (71) an einem Element vorgesehen sind, das zusammen mit dem hinteren Wellen-Element (60) verlagert ist, wenn das hintere Wellen-Element (60) konfiguriert ist zu oder an dem hinteren Wellen-Element (60) zu drehen, und der zweite Abschnitt (41) und der vierte Abschnitt (43) sind an einem Element vorgesehen, das relativ zu dem hinteren Wellen-Element (60) verlagert ist, wenn das hintere Wellen-Element (60) konfiguriert ist zu drehen.

2. Das Fahrzeug (1) gemäß Anspruch (1), **dadurch gekennzeichnet, dass** der Körper-Rahmen (21) einen rechten Rahmen (92) und einen linken Rahmen (91) hat, der vorgesehen ist links von dem rechten Rahmen (92), wobei
ein vorderer Wellen-Lager-Abschnitt (212), der konfiguriert ist, um das vordere Wellen-Element (68) zu lagern, so dass es dreht, durch den rechten Rahmen (92) und den linken Rahmen (91) ist gelagert, und wobei
ein hinterer Wellen-Lager-Abschnitt (211), der konfiguriert ist, um das hintere Wellen-Element (60) zu lagern, so dass es dreht, ist an dem rechten Rahmen (92) und dem linken Rahmen (91) hinter einem Verbindungs-Abschnitt, der konfiguriert ist, um den rechten Rahmen (92) und den linken Rahmen (91) mit dem vorderen Wellen-Lager-Abschnitt (212) in der Vorder- und Rück-Richtung des Körper-Rahmens (21) zu verbinden, vorgesehen.

3. Das Fahrzeug (1) gemäß Anspruch (1), **dadurch gekennzeichnet, dass** der Körper-Rahmen (21) einen vorderen Wellen-Lager-Abschnitt (212) hat, der einen schwenkbaren Lager-Abschnitt (212b) hat, welcher das Quer-Element (51, 52) lagert, so dass es dreht, und wobei
das vordere Wellen-Element (68) konfiguriert ist den vorderen Wellen-Lager-Abschnitt (212) zu durchdringen.

4. Das Fahrzeug (1) gemäß Anspruch (1), **dadurch gekennzeichnet, dass** zumindest ein Mittel-Wellen-Element (69) zwischen dem vorderen Wellen-Element (68) und dem hinteren Wellen-Element (60) vorgesehen ist, so dass eine Lenk-Kraft, die zu dem hinteren Wellen-Element (60) übertragen ist, zu dem vorderen Wellen-Element (68) über das MittelWellen-Element (69) übertragen ist.

5. Das Fahrzeug (1) gemäß Anspruch (1), **dadurch gekennzeichnet, dass** das hintere Wellen-Element (60) kürzer als das vordere Wellen-Element (68) ist.

6. Das Fahrzeug (1) gemäß Anspruch (1), **dadurch gekennzeichnet, dass** das hintere Wellen-Element (60) länger als das vordere Wellen-Element (68) ist.

7. Das Fahrzeug (1) gemäß Anspruch (1), **dadurch gekennzeichnet, dass,** wenn gesehen von oben von dem Fahrzeug (1), ist zumindest ein Teil von dem Lenk-Verriegelungs-Mechanismus (40) hinter dem hinteren Wellen-Element (60) positioniert.

8. Das Fahrzeug (1) gemäß Anspruch (1), **dadurch gekennzeichnet, dass,** wenn gesehen von oben von dem Fahrzeug (1), das aufrecht steht und das in einem nicht gelenkten Zustand gehalten ist, ist zumindest ein Teil des Verbindungs-Elements (80) entweder rechts oder links von der hinteren Achse (a) in Bezug auf die Links- und Rechts-Richtung des Körper-Rahmens (21) plaziert, und wobei wenn gesehen von oben von dem Fahrzeug (1), das aufrecht steht und was nicht gelenkt ist, ist zumindest ein Teil des Lenk-Verriegelungs-Mechanismus entweder rechts oder links von der hinteren Achse (a) in Bezug auf die Links- und Rechts-Richtung des Körper-Rahmens (21) plaziert.

9. Das Fahrzeug (1) gemäß Anspruch (1), **dadurch gekennzeichnet, dass** das Verbindungs-Element (80) konfiguriert ist, um eine Drehung des hinteren Wellen-Elements (60) zu dem vorderen Wellen-Element (68) durch eine Lenker-Konstruktion zu übertragen, die zumindest ein Gelenk hat.

10. Das Fahrzeug (1) gemäß Anspruch (1), **dadurch gekennzeichnet, dass** das Quer-Element ein oberes Quer-Element (51) und ein unteres Quer-Element (52) hat, das unterhalb des oberen Quer-Elements (51) vorgesehen ist, wobei
der Körper-Rahmen (21) einen oberen Lager-Abschnitt (C) hat, der konfiguriert ist, um das obere Quer-Element (51) zu lagern, so dass es dreht, und einen unteren Lager-Abschnitt (I) hat, der konfiguriert ist, um das untere Quer-Element (52) zu lagern, so dass es dreht, und wobei
das vordere Wellen-Element (68) konfiguriert ist, den Körper-Rahmen zu durchdringen, so dass das vordere Wellen-Element (68) den oberen Lager-Abschnitt (C) und den unteren Lager-Abschnitt (I) passiert, wenn gesehen von vorne von dem Fahrzeug (1).

11. Das Fahrzeug (1) gemäß Anspruch (1), **dadurch gekennzeichnet, dass** der Körper-Rahmen (21) einen Lenker-Lager-Abschnitt (212) hat, der konfiguriert ist, um das Quer-Element (51, 52) zu lagern, so dass es dreht, wobei
das Quer-Element (52) ein vorderes Quer-Element (522a) hat, das vor dem Lenker-Lager-Abschnitt (212) plaziert ist, und ein hinteres Quer-Element (522b) hat, das hinter dem Lenker-Lager-Abschnitt (212) plaziert ist, und wobei
die vordere Lenk-Achse (b) des vorderen Wellen-Elements (68) zwischen einem vorderen Ende des vorderen Quer-Elements (522a) und einem hinteren Ende des hinteren Quer-Elements (522b) plaziert ist.

12. Das Fahrzeug (1) gemäß Anspruch (1), **dadurch gekennzeichnet, dass** der Körper-Rahmen (21) einen rohrförmigen Lenker-Lager-Abschnitt (212) hat, der konfiguriert ist, um das Quer-Element (51, 52) zu lagern, so dass es dreht, wobei
das vordere Wellen-Element (68) koaxial mit dem rohrförmigen Lenker-Lager-Abschnitt (212) vorgesehen ist, und wobei
zumindest ein Teil von dem vorderen Wellen-Element (68) in das Innere des rohrförmigen Lenker-Lager-Abschnitts (212) eingesetzt ist.

## Revendications

1. Véhicule (1) ayant :
un châssis de corps (21) qui peut se penser sur la droite du véhicule (1) lorsque le véhicule (1) tourne à droite et peut se pencher sur la gauche du véhicule (1) lorsque le véhicule (1) tourne à gauche ;
une roue avant droite (32) et une roue avant gauche (31) qui sont prévues de manière à être alignées côte à côte dans une direction gauche-droite du châssis de corps (21) ;
un mécanisme de liaison (5) qui comporte une traverse (51) configurée pour tourner autour d'un axe de liaison (M) configuré pour s'étendre dans une direction avant-arrière du châssis de corps (21) par rapport au châssis de corps (21), qui est configuré pour supporter la roue avant droite (32) et la roue avant gauche (31) de manière à être déplacé relativement dans une direction haut-bas du châssis de corps (21) et qui est configuré pour supporter la roue avant droite (32) de manière à tourner autour d'un axe de direction droit (Y) qui est configuré pour s'étendre dans la direction haut-bas du châssis de corps (21) et est configuré pour supporter la roue avant gauche (31) de manière à tourner autour d'un axe de direction gauche (X) qui est parallèle à l'axe de direction droit (Y) ; et
un mécanisme de transmission de force de braquage (6) qui comporte une partie d'entrée de force de braquage (23) qui est située entre l'axe de direction droit (Y) et l'axe de direction gauche (X) en regardant depuis l'avant du véhicule (1), et qui est prévu pour tourner autour d'un axe de direction médian (a) qui est parallèle à l'axe de direction droit (Y) et qui est configuré pour transmettre une force de braquage qui est entrée dans la partie d'entrée de force de braquage (23) vers la roue avant droite (32) et la roue avant gauche (31),
**caractérisé en ce que** le mécanisme de transmission de force de braquage (6) a :
un élément d'arbre arrière (60) dans lequel une force de braquage est entrée à partir de la partie d'entrée de force de braquage (23), et qui est supporté sur le châssis de corps (21) pour tourner autour d'un axe arrière (a) ;
un élément d'arbre avant (68) qui est situé en avant de l'élément d'arbre arrière (60) par rapport à la direction avant-arrière du châssis de corps (21) et qui est supporté sur le châssis de corps (21) pour tourner autour d'un axe de direction avant (b) ;
un élément de connexion (80) qui est configuré pour transmettre la rotation de l'élément d'arbre arrière (60) à l'élément d'arbre avant (68),
sur l'axe de liaison (M) de la traverse (51), une distance (D1) entre l'élément d'arbre avant (68) et la traverse (51) est inférieure à une distance (D2) entre l'élément d'arbre arrière (60) et la traverse (51), en regardant depuis un côté du véhicule (1) qui est debout droit et qui n'est pas du tout braqué, une distance entre l'élément d'arbre avant (68) et l'axe de direction droit (Y) étant inférieure à une distance (D3) entre l'élément d'arbre arrière (60) et l'axe de braquage droit (Y), en regardant depuis le côté du véhicule (1) qui est debout droit et qui n'est pas du tout braqué, une distance (D4) entre l'élément d'arbre arrière (60) et l'axe de direction intermédiaire (a) étant inférieure à une distance entre l'élément d'arbre avant (68) et l'axe de direction médian (a),
un mécanisme de verrouillage de braquage (40) qui comprend une première partie (42) et une deuxième partie (41) pouvant être déplacées l'une par rapport à l'autre et empêchant le déplacement de la première partie (42) par rapport à la deuxième partie (41) pour ainsi rendre impossible le braquage de la roue avant droite (32) et de la roue avant gauche (31) ; et
un mécanisme d'arrêt de braquage (70) qui comprend une troisième partie (71) et une quatrième partie (73) qui peuvent être déplacées l'une par rapport à l'autre et qui sont configurées pour arrêter le déplacement relatif de la troisième partie (71) vers la quatrième partie (73) de manière à empêcher que la roue avant droite (32) et la roue avant gauche (31) ne soient braquées ou dépassent un angle de braquage maximal, pour restreindre ainsi l'angle de braquage maximum de la roue avant droite (32) et de la roue avant gauche (31), et dans lequel
dans le mécanisme de verrouillage de braquage (40) et le mécanisme d'arrêt de braquage (70), la première partie (42) et la troisième partie (71) sont prévues sur un élément qui est déplacé avec l'élément d'arbre arrière (60) lorsque l'élément d'arbre arrière (60) est configuré pour tourner, ou sur l'arbre arrière (60), et la deuxième partie (41) et la quatrième partie (73) sont prévues sur un élément qui est déplacé par rapport à l'arbre arrière (60) lorsque l'arbre arrière (60) est configuré pour tourner.

2. Véhicule selon la revendication 1, **caractérisé en ce que** le châssis de corps (21) comporte un châssis droit (92) et un châssis gauche (91) qui est prévu à gauche du châssis droit (92), dans lequel
une partie de support d'arbre avant (212) qui est configurée pour supporter l'élément d'arbre avant (68) de manière à tourner est supportée par le châssis droit (92) et le châssis gauche (91), et dans lequel
une partie de support d'arbre arrière (211) qui est configurée pour supporter l'élément d'arbre arrière (60) de façon à tourner est prévue sur le châssis droit (92) et le châssis gauche (91) derrière une partie de connexion qui est configurée pour connecter le châssis droit (92) et le châssis gauche (91) avec la partie de support d'arbre avant (212) dans la direction avant-arrière du châssis de corps (21).

3. Véhicule (1) selon la revendication 1, **caractérisé en ce que** le châssis de corps (21) comporte une partie de support d'arbre avant (212) ayant une partie de support pivotante (212b) qui supporte la traverse (51, 52) de manière à tourner, et dans lequel l'élément d'arbre avant (68) est configuré pour pénétrer dans la partie de support d'arbre avant (212).

4. Véhicule (1) selon la revendication 1, **caractérisé en ce qu'**au moins un élément d'arbre médian (69) est prévu entre l'élément d'arbre avant (68) et l'élément d'arbre arrière (60), de sorte qu'une force de braquage qui est transmise à l'élément d'arbre arrière (60) est transmise à l'élément d'arbre avant (68) par l'intermédiaire de l'élément d'arbre médian (69).

5. Véhicule (1) selon la revendication 1, **caractérisé en ce que** l'élément d'arbre arrière (60) est plus court que l'élément d'arbre avant (68).

6. Véhicule (1) selon la revendication 1, **caractérisé en ce que** l'élément d'arbre arrière (60) est plus long que l'élément d'arbre avant (68).

7. Véhicule (1) selon la revendication 1, **caractérisé en ce qu'**en regardant depuis le haut du véhicule (1), au moins une partie du mécanisme de verrouillage de braquage (40) est située derrière l'élément d'arbre arrière (60).

8. Véhicule (1) selon la revendication 1, **caractérisé en ce qu'**en regardant depuis le haut du véhicule (1) qui est debout droit et qui n'est pas braqué du tout, au moins une partie de l'élément de connexion (80) est située soit à droite soit à gauche de l'axe arrière (a) par rapport à la direction gauche-droite du châssis de corps (21), et dans lequel
en regardant depuis le haut du véhicule (1) qui est debout droit et qui n'est pas du tout braqué, au moins une partie du mécanisme de connexion (40) est située soit à droite soit à gauche de l'axe arrière (a) par rapport à la direction gauche-droite du châssis de corps (21).

9. Véhicule (1) selon la revendication 1, **caractérisé en ce que** l'élément de connexion (80) est configuré pour transmettre un tour de l'élément d'arbre arrière (60) à l'élément d'arbre avant (68) par une construction de liaison ayant au moins un joint.

10. Véhicule (1) selon la revendication 1, **caractérisé en ce que** la traverse présente une traverse supérieure (51) et une traverse inférieure (52) qui est prévue sous la traverse supérieure (51), dans lequel
le châssis de corps (21) comporte une partie de support supérieure (C) qui est configurée pour supporter la traverse supérieure (51) de manière à tourner et une partie de support inférieure (I) qui est configurée pour supporter la traverse inférieure (52) de manière à tourner, et dans lequel
l'élément d'arbre avant (68) est configuré pour pénétrer dans le châssis de corps (21) de sorte que l'élément d'arbre avant (68) traverse la partie de support supérieure (C) et la partie de support inférieure (I) en regardant depuis l'avant du véhicule (1).

11. Véhicule (1) selon la revendication 1, **caractérisé en ce que** le châssis de corps (21) comporte une partie de support de liaison (212) qui est configurée pour supporter la traverse (51, 52) de façon à tourner, dans lequel
la traverse (52) comporte un élément de traverse avant (522a) qui est situé en avant de la partie de support de liaison (212) et un élément de traverse arrière (522b) qui est situé en arrière de la partie de support de liaison (212), et dans lequel
l'axe de direction avant (b) de l'élément d'arbre avant (68) est situé entre une extrémité avant de l'élément de traverse avant (522a) et une extrémité arrière de l'élément de traverse arrière (522b).

12. Véhicule (1) selon la revendication 1, **caractérisé en ce que** le châssis de corps (21) comporte une partie de support de liaison en forme de tuyau (212) qui est configurée pour supporter la traverse (51, 52) de façon à tourner, dans lequel l'élément d'arbre avant (68) est prévu coaxialement par rapport à la partie de support de liaison en forme de tuyau (212), et dans lequel
au moins une partie de l'élément d'arbre avant (68) est insérée dans un intérieur de la partie de support de liaison en forme de tuyau (212).
